(19) Europäisches Patentamt
European Patent Office
Office européen des brevets

(11) **EP 4 696 664 A1**

(12) **EUROPÄISCHE PATENTANMELDUNG**

(43) Veröffentlichungstag:
**18.02.2026 Patentblatt 2026/08**

(21) Anmeldenummer: **24194438.8**

(22) Anmeldetag: **14.08.2024**

(51) Internationale Patentklassifikation (IPC):
***C03B 37/012*** *(2006.01)* ***C03B 37/027*** *(2006.01)*

(52) Gemeinsame Patentklassifikation (CPC):
**C03B 37/0122; C03B 37/01245; C03B 37/01248; C03B 37/02781;** C03B 2203/14; C03B 2203/16; C03B 2203/42

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**
Benannte Erstreckungsstaaten:
**BA**
Benannte Validierungsstaaten:
**GE KH MA MD TN**

(71) Anmelder: **Heraeus Quarzglas GmbH & Co. KG 63450 Hanau (DE)**

(72) Erfinder:
• **Rosenberger, Manuel 63801 Kleinostheim (DE)**
• **Vydra, Jan 06803 Bitterfeld-Wolfen (DE)**
• **Schuster, Kay 06803 Bitterfeld-Wolfen (DE)**
• **Vukoje, Davor 63801 Kleinostheim (DE)**

(74) Vertreter: **Heraeus IP Heraeus Business Solutions GmbH Intellectual Property Heraeusstraße 12-14 63450 Hanau (DE)**

(54) **VERFAHREN ZUR HERSTELLUNG EINER ANTIRESONANTEN HOHLKERNFASER**

(57) Die Erfindung betrifft ein Verfahren zur Herstellung einer antiresonanten Hohlkernfaser, bei welchem Vorformlinge und Vorformen eingesetzt werden, welche größere Außen- und Innendurchmesser aufweisen als üblich. Die Erfindung betrifft ebenfalls eine primäre Vorform und eine Baueinheit, welche Halbzeuge des erfindungsgemäßen Verfahrens sind.

**Beschreibung**

Die Erfindung betrifft ein Verfahren zur Herstellung einer antiresonanten Hohlkernfaser, die einen sich entlang einer Faser-Längsachse erstreckenden Hohlkern und einen den Hohlkern umgebenden Mantelbereich, der eine Anzahl von Antiresonanzelementen umfasst, aufweist. Für das Verfahren kommen diverse Vorformen zur Anwendung, die einen erfindungsgemäß definierten Durchmesser aufweisen.

## HINTERGRUND DER ERFINDUNG UND STAND DER TECHNIK

Herkömmliche Monomode-Lichtleitfasern aus Vollmaterial haben einen Kernbereich aus Glas, der von einem Mantelbereich aus Glas mit niedrigerem Brechungsindex umgeben ist. Die Lichtleitung beruht dabei auf Totalreflexion zwischen Kern- und Mantelbereich. Die Wechselwirkungen des geführten Lichtes mit dem Vollmaterial sind jedoch mit einer erhöhten Latenz bei der Datenübertragung und relativ niedrigen Schädigungsschwellen gegenüber energiereicher Strahlung verbunden.

Diese Nachteile vermeiden oder verringern "Hohlkernfasern", bei denen der Kern einen evakuierten, mit Gas oder Flüssigkeit gefüllten Hohlraum umfasst. In Hohlkernfasern ist die Wechselwirkung des Lichtes mit dem Glas geringer als in Vollkernfasern. Der Brechungsindex des Kerns ist kleiner als der des Mantels, so dass eine Lichtleitung durch Totalreflexion nicht möglich ist und das Licht normalerweise aus dem Kern in den Mantel entweichen würde. In Abhängigkeit vom physikalischen Mechanismus der Lichtleitung werden Hohlkernfasern unterteilt in "photonische Bandlückenfasern" und "Antiresonanz-Reflexionsfaser".

Bei "photonischen Bandlückenfasern" ist der hohle Kernbereich von einem Mantel umgeben, in dem kleine Hohlkanäle periodisch angeordnet sind. Die periodische Struktur der Hohlkanäle im Mantel bewirkt den in Anlehnung an die Halbleitertechnologie als "photonische Bandlücke" bezeichneten Effekt, wonach an den Mantelstrukturen gestreutes Licht bestimmter Wellenlängenbereiche aufgrund von Braggreflexion im zentralen Hohlraum konstruktiv interferiert und sich nicht transversal im Mantel ausbreiten kann.

Bei der als antiresonanten Hohlkernfaser ("antiresonant hollow-core fibers"; ARHCF) bezeichneten Ausführungsform der Hohlkernfaser ist der hohle Kernbereich von einem inneren Mantelbereich umgeben, in dem sogenannte "antiresonante Elemente" (oder "Antiresonanzelemente"; kurz: "AREs") angeordnet sind. Die um den Hohlkern gleichmäßig verteilten Wandungen der Antiresonanzelemente können als in Antiresonanz betriebene Fabry-Perot-Kavitäten wirken, die das auftreffende Licht reflektieren und durch den Faserkern leiten.

Diese Fasertechnologie verspricht eine niedrige optische Dämpfung, ein sehr breites Transmissionsspektrum (auch im UV- oder IR-Wellenlängenbereich) und eine geringe Latenz bei der Datenübertragung.

Potenzielle Anwendungen der Hohlkernfasern liegen auf dem Gebiet der Datenübertragung, der Hochleistungsstrahlführung, beispielsweise zur Materialbearbeitung, der Modalfilterung, und der nichtlinearen Optik, insbesondere zur Superkontinuumserzeugung, vom ultravioletten bis infraroten Wellenlängenbereich.

Eine Schwierigkeit bei der Herstellung von antiresonanten Hohlkernfasern ist die schlechte Skalierbarkeit ihrer Produktion für einen industriellen Maßstab. Antiresonante Hohlkernfasern bestehen aus teils besonders filigranen, gläsernen Einzelteilen, die miteinander verbunden und auch in ihrer Form hinsichtlich der Länge, der Außen- sowie Innendurchmesser verändert werden können müssen, ohne, dass sie dabei beschädigt werden. Da die Bestandteile zu diesem Zweck hohen Temperaturen, mechanischem Stress und Extremdrücken ausgesetzt werden müssen, ist die Entwicklung von geeigneten Verfahrensparametern für die industrielle Großproduktion wünschenswert.

Im Stand der Technik sind bereits eine Reihe von Verfahren bekannt, welche die Herstellung von antiresonanten Hohlkernfasern in einem großen Maßstab ermöglichen sollen.

In EP 3 323 791 A und EP 3 590 899 A wird je eine Variante eines sogenannten Upward-Draw Prozesses und eine dafür geeignete Vorrichtung beschrieben. Dabei wird ein Halbzeug aufwärts durch eine Heißformzone bewegt, während Kollabierungs- Elongierungs- oder Aufkollabierungsschritte angewendet werden. Dem Upward-Draw Prozess steht prinzipiell der Downward-Draw Prozess gegenüber. Darin werden Halbzeuge abwärts durch eine Heißformzone bewegt. Durch die aufwärtsgerichtete Zugrichtung wird eine bessere Kontrolle über Heißformprozessschritte gewährleistet.

EP 4 289 798 A betrifft ein Verfahren zur Herstellung von photonischen Kristallfasern (PCF). Das Verfahren erfordert zunächst eine Auswahl von Kapillaren anhand ihres Durchmessers und ihrer Wandstärken. Die ausgewählten Kapillaren werden dann in der Innenseite eines Hüllrohres angeordnet. Die so angeordneten Halbzeuge werden anschließend in einem üblichen Zugverfahren zu einer Vorform weiterverarbeitet, welche wiederum ebenfalls in einem Zugverfahrensschritt zur Hohlkernfaser ausgezogen wird. Nachteilhaft am in EP 4 289 798 A beschriebenen Verfahren ist neben der umständlichen Auswahl der Kapillaren, dass während des Zugverfahrens erhöhte thermische und mechanische Belastungen auf die Kapillaren einwirken.

EP 4 011 840 A betrifft ein Verfahren zur Herstellung einer Vorform für eine antiresonante Hohlkernfaser. Die Vorform besteht aus mindestens einem Hüllrohr und mindestens einem Antiresonanzelement-Vorformling, der mittels eines thermischen Eintrags in der Innenseite des Hüllrohrs fixiert wird. Dazu ist ein Kontaktelement zwischen dem Hüllrohr und dem mindestens einen Antiresonanzelement-Vorformling nötig, um das Risiko zu vermeiden, den Antiresonanz-Vorformling durch den thermischen Eintrag zu beschädigen.

In der EP 3 766 849 A wird ein Verfahren zur Herstellung einer antiresonanten Hohlkernfaser und eine primäre Vorform zur Herstellung einer antiresonanten Hohlkernfaser offenbart. Dabei wird ein Mantelrohr auf die primäre Vorform aufkollabiert und eine sekundäre Vorform erhalten. Die primäre Vorform weist einen Außendurchmesser im Bereich von 20 mm bis 70 mm auf.

In der EP 3 766 844 A wird ein Verfahren zur Herstellung einer antiresonanten Hohlkernfaser aus einer primären und einer sekundären Vorform beschrieben. Im Zuge des Verfahrens wird auf der primären Vorform zusätzliches Mantelmaterial kollabiert, um so eine sekundäre Vorform zu erzeugen. Das Verfahren ist dabei dadurch gekennzeichnet, dass die primäre Vorform während des Zugverfahrens stirnseitig verschlossen wird, um Hohlkanalgrößen beim Verformungsprozess nicht zu verändern, so dass die Hohlkanäle der Fasern die Geometrie aus der Vorform beibehalten. Die sekundäre Vorform weist Außendurchmesser im Bereich von 30 bis 90 mm auf.

In der EP 3 766 848 A wird ein Verfahren zur Herstellung einer antiresonanten Hohlkernfaser und einer Vorform zur Herstellung einer antiresonanten Hohlkernfaser offenbart. Dabei wird ein großes Hüllrohr auf die Vorform kollabiert, um eine primäre Vorform zu erzeugen. Das Hüllrohr weist streng definierte geometrische Abmessungen auf, die sich auf den Außendurchmesser und die Rohrlänge beziehen. Weiterhin weisen die im Hüllrohr fixierten Antiresonanzelement-Vorformlinge ebenso streng definierte Abmessungen auf. Das Verfahren weist den Nachteil auf, dass die Antiresonanzelement Vorformlinge klein dimensioniert sind. Daher sind nur kleine Winkelabweichungen zwischen Antiresonanzelement-Vorformling und Hüllrohr möglich, was das Verfahren verkompliziert. Des Weiteren wird versucht, die Antiresonanzelement-Vorformlinge durch ein besonders großes Hüllrohr vor thermischen und mechanischen Einflüssen während der Heißformprozessschritte abzuschirmen. Dies birgt jedoch den Nachteil, dass besonders dickwandige Hüllrohre beim Erhitzen dazu neigen, Risse zu bilden.

## AUFGABE DER ERFINDUNG

Antiresonante Hohlkernfasern, insbesondere solche mit ineinander verschachtelten Strukturelementen, haben komplexe Innengeometrien, was ihre exakte und reproduzierbare Herstellung erschwert. Dies gilt umso mehr, da zur Einhaltung der Resonanz- beziehungsweise Antiresonanzbedingungen bereits geringe Maßabweichungen in der Größenordnung der Arbeitswellenlänge des zu führenden Lichts nicht tolerierbar sind. Abweichungen von der Soll-Geometrie können ihre Ursache bei der Konfiguration der Faser-Vorform haben, und sie können auch durch ungewollte, nichtmaßstäbliche Verformungen beim Faserziehprozess auftreten.

Im Stand der Technik bekannte Verfahren erfordern es häufig, viele Elemente positionsgenau zusammenzufügen. Beispielsweise müssen zur Herstellung der in EP 3 766 348 A beschriebenen antiresonanten Hohlkernfaser die Antiresonanzelement-Vorformlinge an streng definierten Sollpositionen platziert werden.

Bei anderen im Stand der Technik beschriebenen Verfahren wird ein großer Fokus auf die Vorauswahl der Antiresonanzelement-Vorformlinge gelegt oder es werden große Hüllrohre verwendet, um die Antiresonanzelement-Vorformlinge schonend verarbeiten zu können.

Ziel der Erfindung ist, ein Verfahren zur kostengünstigen Herstellung einer antiresonanten Hohlkernfaser bereitzustellen, welches Beschränkungen herkömmlicher Herstellungsverfahren vermeidet.

Insbesondere ist es Ziel der Erfindung, ein Verfahren zur Herstellung einer antiresonanten Hohlkernfaser und einer Vorform für antiresonante Hohlkernfasern bereitzustellen, mit dem reproduzierbar eine hohe Präzision der Strukturelemente und eine exakte Positionierung der Antiresonanzelemente in der Faser in einer ausreichend stabilen Weise auch im industriellen Maßstab erreicht werden kann.

Das erfindungsgemäß nachgesuchte Verfahren soll darüber hinaus die Bereitstellung von Hohlkernfaser-Vorformen mit einer umfangreicheren Größe als der Stand der Technik ermöglichen, wobei die Vorformen dann zu entsprechenden Fasern ausgezogen werden. Hierdurch soll ein industriell vorteilhaftes Verfahren bereitgestellt werden. Derzeit ist nicht bekannt, dass Hohlkernfaser-Vorformen im industriellen Maßstab mit Größen > 20 km / Preform bzw. Assembly hergestellt werden können.

Es ist den Erfindern der vorliegenden Erfindung überraschend gelungen, diese Aufgaben zu lösen, indem Kapillaren oder andere Antiresonanzelement-Vorformlinge, Hüll- bzw. Mantelrohre und daraus resultierende Halbzeuge mit verhältnismäßig großen Dimensionen, insbesondere betreffend den Durchmesser, bereitgestellt werden und in einem oder mehreren erfindungsgemäßen Schritten zu antiresonanten Hohlkernfasern zu verarbeiten.

## KURZBESCHREIBUNG DER ERFINDUNG

Die vorliegende Erfindung betrifft ein Verfahren zur Herstellung einer antiresonanten Hohlkernfaser gemäß den nachfolgenden Punkten:

[1] Verfahren zur Herstellung einer antiresonanten Hohlkernfaser, die einen sich entlang einer Faser-Längsachse erstreckenden Hohlkern und einen den Hohlkern umgebenden Mantelbereich aufweist, der mehrere Antiresonanzelemente umfasst, umfassend die mindestens einmalig ausgeführten Verfahrensschritte:

a) Bereitstellen eines primären Vorformlings (Stack), umfassend mindestens ein Hüllrohr, das eine Hüllrohr-Innenbohrung und eine Hüllrohr-Längsachse aufweist, entlang der sich eine von einer Innenhüllrohrfläche und einer Außenhüllrohrfläche begrenzte Hüllrohr-Wandung erstreckt, und umfassend Antiresonanzelement-Vorformlinge; und

Bereitstellen mindestens eines Mantelrohrs, das eine Mantelrohr-Innenbohrung und eine Mantelrohr-Längsachse aufweist, entlang der sich eine von einer Innenmantelfläche und einer Außenmantelfläche begrenzte Mantelrohr-Wandung erstreckt, und Einfügen des primären Vorformlings (Stack) in das Mantelrohr; und

b) Durchführen eines Faserzugs bei gleichzeitigem Aufkollabieren des Mantelrohrs..

Dadurch gekennzeichnet, dass das Mantelrohr einen Außendurchmesser von 100 mm bis 240 mm aufweist.

[2] Verfahren zur Herstellung einer antiresonanten Hohlkernfaser, die einen sich entlang einer Faser-Längsachse erstreckenden Hohlkern und einen den Hohlkern umgebenden Mantelbereich aufweist, der mehrere Antiresonanzelemente umfasst, umfassend die mindestens einmalig ausgeführten Verfahrensschritte:

a) Bereitstellen eines primären Vorformlings umfassend mindestens ein Hüllrohr das eine Hüllrohr-Innenbohrung und eine Hüllrohr-Längsachse aufweist, entlang der sich eine von einer Innenhüllrohrfläche und einer Außenhüllrohrfläche begrenzte Hüllrohr-Wandung erstreckt, und umfassend Antiresonanzelement-Vorformlinge; und

Weiterverarbeiten des primären Vorformlings zu einer primären Vorform (Cane) durch

i) Kollabieren, oder
ii) Kollabieren und gleichzeitiges Elongieren, oder
iii) Kollabieren und anschließendes Elongieren; und

b) Bereitstellen mindestens eines Mantelrohrs, das eine Mantelrohr-Innenbohrung und eine Mantelrohr-Längsachse aufweist, entlang der sich eine von einer Innenmantelfläche und einer Außenmantelfläche begrenzte Mantelrohr-Wandung erstreckt, und Einfügen der primären Vorform in das Mantelrohr; und

c) Durchführen eines Faserzugs bei gleichzeitigem Aufkollabieren des Mantelrohres.

Dadurch gekennzeichnet, dass das Mantelrohr einen Außendurchmesser von 100 mm bis 240 mm aufweist.

[3] Verfahren zur Herstellung einer antiresonanten Hohlkernfaser, die einen sich entlang einer Faser-Längsachse erstreckenden Hohlkern und einen den Hohlkern umgebenden Mantelbereich aufweist, der mehrere Antiresonanzelemente umfasst, umfassend die mindestens einmalig ausgeführten Verfahrensschritte:

a) Bereitstellen eines primären Vorformlings, umfassend mindestens ein Hüllrohr, das eine Hüllrohr-Innenbohrung und eine Hüllrohr-Längsachse aufweist, entlang der sich eine von einer Innenhüllrohrfläche und einer Außenhüllrohrfläche begrenzte Hüllrohr-Wandung erstreckt, und umfassend Antiresonanzelement-Vorformlinge; und gegebenenfalls

Weiterverarbeiten des primären Vorformlings zu einer primären Vorform durch

i) Kollabieren, oder
ii) Kollabieren und gleichzeitiges Elongieren, oder
iii) Kollabieren und anschließendes Elongieren; und

b) Bereitstellen mindestens eines Mantelrohrs, das eine Mantelrohr-Innenbohrung und eine Mantelrohr-Längsachse aufweist, entlang der sich eine von einer Innenmantelfläche und einer Außenmantelfläche begrenzte Mantelrohr-Wandung erstreckt, und Einfügen des primären Vorformlings oder der primären Vorform in das Mantelrohr durch

i) Aufkollabieren; oder
ii) Aufkollabieren und gleichzeitiges Elongieren, oder
iii) Aufkollabieren und anschließendes Elongieren;

unter Bildung einer finalen Vorform die durch einen Außendurchmesser von 28 mm bis 60 mm gekennzeichnet ist; und

c) Durchführen eines Faserzugs.

Dadurch gekennzeichnet, dass das Mantelrohr einen Außendurchmesser von 100 mm bis 240 mm aufweist.

[4] Verfahren zur Herstellung einer antiresonanten Hohlkernfaser, die einen sich entlang einer Faser-Längsachse erstreckenden Hohlkern und einen den Hohlkern umgebenden Mantelbereich aufweist, der mehrere Antiresonanzelemente umfasst, umfassend die mindestens einmalig ausgeführten Verfahrensschritte:

a) Bereitstellen eines primären Vorformlings, umfassend mindestens ein Hüllrohr, das eine Hüllrohr-Innenbohrung und eine Hüllrohr-Längsachse aufweist, entlang der sich eine von einer Innenhüllrohrfläche und einer Außenhüllrohrfläche begrenzte Hüllrohr-Wandung erstreckt, und umfassend Antiresonanzelement-Vorformlinge; und gegebenenfalls
Weiterverarbeiten des primären Vorformlings zu einer primären Vorform durch

    i) Kollabieren, oder
    ii) Kollabieren und gleichzeitiges Elongieren, oder
    iii) Kollabieren und anschließendes Elongieren; und

b) Bereitstellen mindestens eines Mantelrohrs, das eine Mantelrohr-Innenbohrung und eine Mantelrohr-Längsachse aufweist, entlang der sich eine von einer Innenmantelfläche und einer Außenmantelfläche begrenzte Mantelrohr-Wandung erstreckt, und Einfügen des primären Vorformlings oder der primären Vorform in das Mantelrohr durch

    i) Aufkollabieren oder
    ii) Aufkollabieren und gleichzeitiges Elongieren, oder
    iii) Aufkollabieren und anschließendes Elongieren;

unter Bildung einer sekundären Vorform die durch einen Außendurchmesser von 100 mm bis 200 mm gekennzeichnet ist; und

c) Herstellen einer finalen Vorform, die durch einen Außendurchmesser von 28 mm bis 60 mm gekennzeichnet ist, aus der sekundären Vorform durch

    i) Kollabieren, oder
    ii) Kollabieren und gleichzeitiges Elongieren, oder
    iii) Kollabieren und anschließendes Elongieren; und

d) Durchführen eines Faserzugs.

Dadurch gekennzeichnet, dass das Mantelrohr einen Außendurchmesser von 100 mm bis 240 mm aufweist.

[5] Verfahren gemäß [1] und [2], dadurch gekennzeichnet, dass das die Schritte a) und b) oder die Schritte b) und c) ununterbrochen auf derselben Anlage ausgeführt werden.

[6] Verfahren gemäß [3] und [4], dadurch gekennzeichnet, dass primäre Vorformen, sekundäre Vorformen oder finale Vorformen auf mehreren unterschiedlichen Anlagen hergestellt und/oder weiterverarbeitet werden.

[7] Verfahren gemäß [1] bis [6], dadurch gekennzeichnet, dass das Elongieren, Kollabieren, Aufkollabieren und Durchführen eines Faserzugs als Heißformprozessschritte ausgeführt werden.

[8] Verfahren gemäß [1] bis [7], dadurch gekennzeichnet, dass das Hüllrohr für primäre Vorformlinge eine Länge von 500 bis 1500 mm aufweist.

[9] Verfahren gemäß [1] bis [8], dadurch gekennzeichnet, dass das Hüllrohr für primäre Vorformlinge einen Innendurchmesser von 25 bis 80 mm aufweist.

[10] Verfahren gemäß [1] bis [9], dadurch gekennzeichnet, dass das Hüllrohr für primäre Vorformlinge einen Außendurchmesser von 41 bis 100 mm aufweist.

[11] Verfahren gemäß [1] bis [10], dadurch gekennzeichnet, dass das Hüllrohr für primäre Vorformlinge eine Wandstärke von 4 mm bis 25 mm aufweist.

[12] Verfahren gemäß [1] bis [11], dadurch gekennzeichnet, dass das Hüllrohr für primäre Vorformlinge einen Innenumfang von 100,0 mm bis 500,0 mm aufweist.

[13] Verfahren gemäß [1] bis [12], dadurch gekennzeichnet, dass die Kapillaren für primäre Vorformlinge einen Außendurchmesser von 2,50 bis 30,00 mm aufweisen.

[14] Verfahren gemäß [1] bis [13], dadurch gekennzeichnet, dass die primären Vorformen eine Länge von größer als 600 mm bis größer als 3000 mm aufweisen.

[15] Verfahren gemäß [1] bis [14], dadurch gekennzeichnet, dass die primären Vorformen einen Außendurchmesser von größer als 24 mm aufweisen.

[16] Verfahren gemäß [1] bis [15], dadurch gekennzeichnet, dass die primären Vorformen eine Wanddicke der Hüllrohrwand von größer als 4,00 mm aufweisen.

[17] Verfahren gemäß [1] bis [16], dadurch gekennzeichnet, dass die Kapillaren in der primären Vorform einen Außendurchmesser von größer als 2,00 mm aufweisen.

[18] Verfahren gemäß [1] bis [17], dadurch gekennzeichnet, dass die Antiresonanzelement-Vorformlinge in der primären Vorform mit dem größten Außendurchmesser einen Außendurchmesser von mindestens 5,00 mm bis 16,00 mm aufweisen.

[19] Verfahren gemäß [1] bis [18], dadurch gekennzeichnet, dass die Antiresonanzelemente in der primären Vorform eine Winkelabweichung gegenüber dem Hüllrohr von weniger als 4,000° bis weniger als 0,05° aufweisen.

[20] Verfahren gemäß [1] bis [19], dadurch gekennzeichnet, dass das Mantelrohr eine Länge von 1500 mm bis 3000 mm aufweist.

[21] Verfahren gemäß [1] bis [20], dadurch gekennzeichnet, dass das Mantelrohr in Form eines Zylinders vorliegt.

[22] Verfahren gemäß [1] bis [21], dadurch gekennzeichnet, dass das Mantelrohr in einem Heißformschritt unter Anlegen eines Vakuums zwischen der Innenseite des Mantelrohrs und der Außenseite des primären Vorformlings oder der primären Vorform auf den primären Vorformling oder auf die primäre Vorform unter Bildung der sekundären Vorform aufkollabiert wird.

[23] Verfahren gemäß [1] bis [22], dadurch gekennzeichnet, dass die Antiresonanzelement-Vorformlinge oder die Antiresonanzelemente bei enlongierenden Schritten verschlossen und mit einem Gasstrom bei einem angelegten Druck strukturell stabilisiert werden.

[24] Verfahren gemäß [23] dadurch gekennzeichnet, dass der angelegte Druck 50 pa bis 400 pa beträgt.

[25] Verfahren gemäß [23] oder [24], dadurch gekennzeichnet, dass elongierte Vorformen oder Vorformlinge stirnseitig verschlossen werden, indem sie stirnseitig mit einer geeigneten Abdichtmasse verschlossen werden.

[26] Verfahren gemäß [23] oder [24], dadurch gekennzeichnet, dass elongierte Vorformen oder Vorformlinge stirnseitig verschlossen werden, indem sie stirnseitig zugeschmolzen werden.

[27] Verfahren gemäß [23] oder [24], dadurch gekennzeichnet, dass elongierte Vorformen oder Vorformlinge stirnseitig verschlossen werden, indem die stirnseitig mittels einer geeigneten Vorrichtung kraftschlüssig verschlossen werden.

[28] Verfahren gemäß [1] bis [27], dadurch gekennzeichnet, dass Heißformprozessschritte bei einer Temperatur von 1750 °C bis 2100 °C ausgeführt werden.

[29] Verfahren gemäß [1], [2], [5] und [7] bis [28], umfassend die Schritte:

a) Bereitstellen eines primären Vorformlings umfassend mindestens ein Hüllrohr das eine Hüllrohr-Innenbohrung und eine Hüllrohr-Längsachse aufweist, entlang der sich eine von einer Innenhüllrohrfläche und einer Außenhüllrohrfläche begrenzte Hüllrohr-Wandung erstreckt, und umfassend Antiresonanzelement-Vorformlinge; und gegebenenfalls

Weiterverarbeiten des primären Vorformlings zu einer primären Vorform durch

i) Kollabieren, oder
ii) Kollabieren und gleichzeitiges Elongieren; und

b) Bereitstellen mindestens eines Mantelrohrs, das eine Mantelrohr-Innenbohrung und eine Mantelrohr-Längsachse aufweist, entlang der sich eine von einer Innenmantelfläche und einer Außenmantelfläche begrenzte Mantelrohr-Wandung erstreckt, und Einfügen des primären Vorformlings oder der primären Vorform in das Mantelrohr; und

c) Durchführen eines Faserzugs bei gleichzeitigem Aufkollabieren des Mantelrohres.

Dadurch gekennzeichnet, dass das Mantelrohr einen Außendurchmesser von 100 mm bis 240 mm aufweist.

[30] Verfahren gemäß [29], umfassend die Schritte:

a) Bereitstellen eines primären Vorformlings umfassend mindestens ein Hüllrohr das eine Hüllrohr-Innenbohrung und eine Hüllrohr-Längsachse aufweist, entlang der sich eine von einer Innenhüllrohrfläche und einer Außenhüllrohrfläche begrenzte Hüllrohr-Wandung erstreckt, und umfassend Antiresonanzelement-Vorformlinge; und Weiterverarbeiten des primären Vorformlings zu einer primären Vorform durch

i) Kollabieren, oder
ii) Kollabieren und gleichzeitiges Elongieren; und

b) Bereitstellen mindestens eines Mantelrohrs, das eine Mantelrohr-Innenbohrung und eine Mantelrohr-Längsachse aufweist, entlang der sich eine von einer Innenmantelfläche und einer Außenmantelfläche begrenzte Mantelrohr-Wandung erstreckt, und Einfügen der primären Vorform in das Mantelrohr; und

c) Durchführen eines Faserzugs bei gleichzeitigem Aufkollabieren des Mantelrohres.

Dadurch gekennzeichnet, dass das Mantelrohr einen Außendurchmesser von 100 mm bis 240 mm aufweist.

[31] Verfahren gemäß [3] und [6] bis [28], umfassend die Schritte:

a) Bereitstellen eines primären Vorformlings, umfassend mindestens ein Hüllrohr, das eine Hüllrohr-Innenbohrung und eine Hüllrohr-Längsachse aufweist, entlang der sich eine von einer Innenhüllrohrfläche und einer Außenhüllrohrfläche begrenzte Hüllrohr-Wandung erstreckt, und umfassend Antiresonanzelement-Vorformlinge; und gegebenenfalls

Weiterverarbeiten des primären Vorformlings zu einer primären Vorform durch

i) Kollabieren, oder
ii) Kollabieren und gleichzeitiges Elongieren; und

b) Bereitstellen mindestens eines Mantelrohrs, das eine Mantelrohr-Innenbohrung und eine Mantelrohr-Längsachse aufweist, entlang der sich eine von einer Innenmantelfläche und einer Außenmantelfläche begrenzte Mantelrohr-Wandung erstreckt, und Einfügen des primären Vorformlings oder der primären Vorform in das Mantelrohr durch

i) Aufkollabieren, oder
ii) Aufkollabieren und gleichzeitiges Elongieren;

unter Bildung einer finalen Vorform die durch einen Außendurchmesser von 28 mm bis 60 mm gekennzeichnet ist; und

c) Durchführen eines Faserzugs.

Dadurch gekennzeichnet, dass das Mantelrohr einen Außendurchmesser von 100 mm bis 240 mm aufweist.

[32] Verfahren gemäß [31], umfassend die Schritte:

a) Bereitstellen eines primären Vorformlings, umfassend mindestens ein Hüllrohr, das eine Hüllrohr-Innenbohrung und eine Hüllrohr-Längsachse aufweist, entlang der sich eine von einer Innenhüllrohrfläche und einer Außenhüllrohrfläche begrenzte Hüllrohr-Wandung erstreckt, und umfassend Antiresonanzelement-Vorformlinge; und
Weiterverarbeiten des primären Vorformlings zu einer primären Vorform durch

i) Kollabieren, oder
ii) Kollabieren und gleichzeitiges Elongieren, oder

b) Bereitstellen mindestens eines Mantelrohrs, das eine Mantelrohr-Innenbohrung und eine Mantelrohr-Längsachse aufweist, entlang der sich eine von einer Innenmantelfläche und einer Außenmantelfläche begrenzte Mantelrohr-Wandung erstreckt, und Einfügen der primären Vorform in das Mantelrohr durch

i) Aufkollabieren, oder
ii) Aufkollabieren und gleichzeitiges Elongieren;

unter Bildung einer finalen Vorform die durch einen Außendurchmesser von 28 mm bis 60 mm gekennzeichnet ist; und
c) Durchführen eines Faserzugs.

Dadurch gekennzeichnet, dass das Mantelrohr einen Außendurchmesser von 100 mm bis 240 mm aufweist.

[33] Verfahren gemäß [4] und [6] bis [28], umfassend die Schritte:

a) Bereitstellen eines primären Vorformlings, umfassend mindestens ein Hüllrohr, das eine Hüllrohr-Innenbohrung und eine Hüllrohr-Längsachse aufweist, entlang der sich eine von einer Innenhüllrohrfläche und einer Außenhüllrohrfläche begrenzte Hüllrohr-Wandung erstreckt, und umfassend Antiresonanzelement-Vorformlinge; und gegebenenfalls
Weiterverarbeiten des primären Vorformlings zu einer primären Vorform durch

i) Kollabieren, oder
ii) Kollabieren und gleichzeitiges Elongieren, oder

b) Bereitstellen mindestens eines Mantelrohrs, das eine Mantelrohr-Innenbohrung und eine Mantelrohr-Längsachse aufweist, entlang der sich eine von einer Innenmantelfläche und einer Außenmantelfläche begrenzte Mantelrohr-Wandung erstreckt, und Einfügen des primären Vorformlings oder der primären Vorform in das Mantelrohr durch

i) Aufkollabieren, oder
ii) Aufkollabieren und gleichzeitiges Elongieren;

unter Bildung einer sekundären Vorform die durch einen Außendurchmesser von 100 mm bis 200 mm gekennzeichnet ist; und
c) Herstellen einer finalen Vorform, die durch einen Außendurchmesser von 28 mm bis 60 mm gekennzeichnet ist, aus der sekundären Vorform durch

i) Kollabieren, oder
ii) Kollabieren und gleichzeitiges Elongieren; und

d) Durchführen eines Faserzugs.

Dadurch gekennzeichnet, dass das Mantelrohr einen Außendurchmesser von 100 mm bis 240 mm aufweist.

[34] Verfahren gemäß [33], umfassend die Schritte:

a) Bereitstellen eines primären Vorformlings, umfassend mindestens ein Hüllrohr, das eine Hüllrohr-Innenbohrung und eine Hüllrohr-Längsachse aufweist, entlang der sich eine von einer Innenhüllrohrfläche und einer Außenhüllrohrfläche begrenzte Hüllrohr-Wandung erstreckt, und umfassend Antiresonanzelement-Vorformlinge; und

Weiterverarbeiten des primären Vorformlings zu einer primären Vorform durch

    i) Kollabieren, oder
    ii) Kollabieren und gleichzeitiges Elongieren, oder

b) Bereitstellen mindestens eines Mantelrohrs, das eine Mantelrohr-Innenbohrung und eine Mantelrohr-Längsachse aufweist, entlang der sich eine von einer Innenmantelfläche und einer Außenmantelfläche begrenzte Mantelrohr-Wandung erstreckt, und Einfügen der primären Vorform in das Mantelrohr durch

    i) Aufkollabieren, oder
    ii) Aufkollabieren und gleichzeitiges Elongieren;

unter Bildung einer sekundären Vorform die durch einen Außendurchmesser von 100 mm bis 200 mm gekennzeichnet ist; und

c) Herstellen einer finalen Vorform, die durch einen Außendurchmesser von 28 mm bis 60 mm gekennzeichnet ist, aus der sekundären Vorform durch

    i) Kollabieren, oder
    ii) Kollabieren und gleichzeitiges Elongieren; und

d) Durchführen eines Faserzugs.

Dadurch gekennzeichnet, dass das Mantelrohr einen Außendurchmesser von 100 mm bis 240 mm aufweist.

[35] Primäre Vorform für eine antiresonante Hohlkernfaser, dadurch gekennzeichnet, dass sie einen Außendurchmesser von größer als 24 mm aufweist.

[36] Primäre Vorform gemäß [34], dadurch gekennzeichnet, dass sie einen Innendurchmesser von 14 mm bis 55 mm aufweist.

[37] Primäre Vorform gemäß [34] oder [35], dadurch gekennzeichnet, dass darin Antiresonanzelement-Vorformlinge im nested-Design angeordnet sind.

[38] Primäre Vorform gemäß [35] bis [37], dadurch gekennzeichnet, dass die darin angeordneten Kapillaren mit dem geringsten Außendurchmesser mindestens einen Außendurchmesser von 2,00 mm aufweisen.

[39] Primäre Vorform gemäß [35] bis [38], dadurch gekennzeichnet, dass die darin angeordneten Antiresonanzelement-Vorformlinge mit dem größten Außendurchmesser mindestens einen Außendurchmesser von 5,00 mm aufweisen.

[40] Primäre Vorform gemäß [35] bis [39] erhältlich als Zwischenprodukt eines Verfahrens gemäß [2] bis [33],

[41] Baueinheit für eine antiresonante Hohlkernfaser umfassend

einen primären Vorformling,

    dadurch gekennzeichnet, dass der primäre Vorformling mindestens ein Hüllrohr umfasst, das eine Hüllrohr-Innenbohrung und eine Hüllrohr-Längsachse aufweist, entlang der sich eine von einer Innenhüllrohrfläche und einer Außenhüllrohrfläche begrenzte Hüllrohr-Wandung erstreckt, und Antiresonanzelement-Vorformlinge umfasst; oder

eine primäre Vorform gemäß [34] bis [39]; und
ein Mantelrohr, dadurch gekennzeichnet, dass das Mantelrohr einen Außendurchmesser zwischen 100 mm und 240 mm aufweist.

[42] Baueinheit gemäß [41], erhältlich als Zwischenprodukt eines Verfahrens gemäß [1] bis [34].

[43] Sekundäre Vorform, erhältlich als Zwischenprodukt eines Verfahrens gemäß [4] bis [28] und [32] bis [34].

[44] Finale Vorform, erhältlich als Zwischenprodukt eines Verfahrens gemäß [3] bis [28] und [30] bis [34].

[45] Antiresonante Hohlkernfaser, erhältlich nach einem Verfahren gemäß [1] bis [34]

[46] Verwendungen von Vorformen und/oder Baueinheiten gemäß [35] bis [44] zur Herstellung von antiresonanten Hohlkernfasern.

## DETAILLIERTE BESCHREIBUNG DER ERFINDUNG

Die vorliegende Erfindung wird wie folgt im Detail beschrieben:

### I. Definitionen

Im Sinne der vorliegenden Erfindung bezeichnet der Begriff *Kollabieren* einen Vorgang, bei welchem die Geometrie eines *Halbzeugs* insoweit verändert wird, dass sich Außen- und Innendurchmesser verringern. Beispielsweise fällt dabei ein rohrförmiges *Halbzeug* also kontrolliert in sich zusammen, wird kontrolliert *kollabiert.* Üblicher-, aber nicht notwendigerweise, werden *Kollabierungsschritte* gemeinsam mit *Elongierungsschritten* und/oder auch mit *Aufkollabierungsschritten* unter Einwirkungen von Temperatur und gegebenenfalls Unterdruck ausgeführt.

Im Sinne der vorliegenden Erfindung bezeichnet der Begriff *Elongieren* einen Vorgang, bei welchem die Geometrie eines *Halbzeugs* insoweit verändert wird, dass die Länge vergrößert wird. *Elongierungsschritte* können nicht ohne *Kollabieren* der *Halbzeuge* im Sinne der Erfindung erfolgen. Sie können gegebenenfalls ebenfalls parallel zu Aufkollabierungsschritten erfolgen. *Elongierungsschritte* werden unter Einwirkungen von Temperatur und gegebenenfalls Druck ausgeführt.

Im Sinne der vorliegenden Erfindung bezeichnet der Begriff *Aufkollabieren* einen Vorgang, bei welchem ein erstes rohrförmiges *Halbzeug* mit einem kleineren Außendurchmesser in einem zweiten rohrförmigen *Halbzeug* mit einem Innendurchmesser, der größer ist als der Außendurchmesser des ersten *Halbzeugs* platziert und anschließend verbunden wird. Dies wird im Allgemeinen erreicht, indem der Außen- und Innendurchmesser des zweiten *Halbzeugs* verringert wird, wodurch das zweite *Halbzeug* auf das erste *Halbzeug aufkollabiert* wird. Üblicher-, aber nicht notwendigerweise, werden *Aufkollabierungsschritte* gemeinsam mit *Kollabierungs-* und/oder *Elongierungsschritten* unter Einwirkungen von Temperatur und gegebenenfalls Unterdruck ausgeführt.

Im Sinne der vorliegenden Erfindung bezeichnet der Begriff *Faserziehen* oder *Faserzug* jenen erfindungsgemäßen Schritt, bei dem aus einem *Halbzeug* eine antiresonante Hohlkernfaser gezogen wird. Erfindungsgemäß wird während dieses Schrittes gleichzeitig sowohl *elongiert* als auch *kollabiert.* Es ist prinzipiell möglich, den *Faserzug* ausgehend von *primären Vorformlingen* bzw. *Stacks, primären Vorformen* bzw. *Canes, Baueinheiten, sekundären Vorformen* oder auch *finalen Vorformen* auszuführen. Bevorzugt wird der *Faserzug* im Sinne der Erfindung mit *Baueinheiten* oder mit *finalen Vorformen* ausgeführt. Der *Faserzug* zeichnet sich durch eine hohe Zuggeschwindigkeit aus. Wenn der *Faserzug* ausgehend von *Baueinheiten* ausgeführt wird, erfolgt dabei bevorzugt gleichzeitig die Fixierung von *Antiresonanzelement-Vorformlingen* in mindestens einem *Hüllrohr* sowie das *Aufkollabieren* von mindestens einem *Mantelrohr* auf das mindestens eine *Hüllrohr.*

Im Sinne der vorliegenden Erfindung ist der Begriff *Halbzeug* ein Sammelbegriff, welcher jedes erfindungsgemäße Zwischenprodukt, das innerhalb eines erfindungsgemäßen Verfahrensschrittes zu einer antiresonanten Hohlkernfaser weiterverarbeitet werden kann, umfasst.

Im Sinne der vorliegenden Erfindung bezeichnet der Begriff *Kapillaren* rohrförmige Körper, die üblicherweise aus Glas bestehen. *Kapillaren* weisen erfindungsgemäß größere Durchmesser auf, als dies üblicherweise im Stand der Technik der Fall ist. Die *Kapillaren* im Sinne der Erfindung weisen eine Kapillar-Innenbohrung und eine Kapillar-Längsachse auf entlang der sich eine von einer Innenkapillarfläche und einer Außenkapillarfläche begrenzte Kapillar-Wandung erstreckt. Der Begriff *Kapillaren* im Sinne der Erfindung bezeichnet ausschließlich einzelne Rohreinheiten. Einerseits können *Kapillaren* einzeln zum Beispiel im Zuge des erfindungsgemäßen Verfahrens in einem *Hüllrohr* fixiert und zu einem *Antiresonanzelement* weiterverarbeitet werden. Andererseits können *Kapillaren* beispielsweise zunächst ineinander platziert und gegebenenfalls fixiert werden, zum Beispiel im *nested-Design,* sodass mindestens eine Innenkapillarfläche der einen *Kapillare* die Außenkapillarfläche der anderen *Kapillare* berührt, wodurch ein *Antiresonanzelement-Vorformling* umfassend *Kapillaren,* die im *nested-Design* angeordnet sind, erhalten wird.

Im Sinne der vorliegenden Erfindung bezeichnet der Begriff *Antiresonanzelement-Vorformling* solche Bestandteile der gemäß des erfindungsgemäßen Verfahrens hergestellten antiresonanten Hohlkernfasern, die im Laufe des Verfahrens zu *Antiresonanzelementen* der antiresonanten Hohlkernfasern werden. Damit können beispielsweise *Kapillaren,* ineinander platzierte *Kapillaren* im *nested-Design,* wobei die *Kapillaren* noch nicht aneinander fixiert sind, oder auch ineinander platzierte *Kapillaren* im *nested-Design,* wobei die *Kapillaren* bereits aneinander fixiert sind, umfasst sein. Es ist im Sinne der Erfindung ebenfalls denkbar andere, mögliche Anordnungen von einzelnen oder mehreren *Kapillaren,* die in einer Innenhüllrohrseite platziert und zu einem *Antiresonanzelement* weiterverarbeitet werden, als Antiresonanzelement-Vorformling zu bezeichnen. Damit dient der Begriff *Antiresonanzelement-Vorformling* also als Sammelbegriff für jedes im erfindungsgemäßen Verfahren verarbeitete Element welches in der antiresonanten Hohlkernfaser ein *Antiresonanzelement* darstellt. Die *Antiresonanzelement-Vorformlinge* können im Zuge des erfindungsgemäßen Verfahrens ihre Form, wie beispielsweise ihren Außen- oder Innendurchmesser oder ihre Länge, noch ändern. Damit werden auch solche *Antiresonanzelement-Vorformlinge* von dem Begriff umfasst, die bereits mindestens einem erfindungsgemäßen Verfahrensschritt unterzogen wurden, aber ihre finale Form als *Antiresonanzelement* noch nicht erlangt haben.

Im Sinne der vorliegenden Erfindung bezeichnet der Begriff *nested-Design* eine besondere Anordnung von *Kapillaren* bzw. eine Art wie mindestens zwei *Kapillaren* einen Antiresonanzelement-Vorformling bilden können. Dabei werden mindestens zwei *Kapillaren* so angeordnet, dass die eine *Kapillare* so in einer anderen *Kapillare* platziert wird, das die Außenkapillarfläche der einen *Kapillare* mit der Innenkapillarfläche der anderen *Kapillare* in Berührung kommt. Prinzipiell können beliebig viele *Kapillaren* im *nested-Design* angeordnet werden, um einen *Antiresonanzelement-Vorformling* im Sinne der Erfindung, umfassend *Kapillaren,* die im *nested-Design* angeordnet sind, zu formen. Solche im *nested-Design* angeordneten *Antiresonanzelement-Vorformlinge* können beispielsweise in einer Form vorliegen, in welcher die *Kapillaren* lediglich ineinander platziert sind. In dieser Form können Sie anschließend in einem *Hüllrohr* platziert und erfindungsgemäß weiterverarbeitet werden. Dabei werden die so angeordneten *Kapillaren* dann aneinander und/oder am *Hüllrohr* fixiert. Es ist erfindungsgemäß aber ebenso umfasst, dass die *Kapillaren,* die im *nested-Design* angeordnet einen *Antiresonanzelement-Vorformling* bilden bereits aneinander fixiert werden, bevor sie in einem *Hüllrohr* platziert oder fixiert werden.

Im Sinne der vorliegenden Erfindung bezeichnet der Begriff *Antiresonanzelement* die finale Form der *Antiresonanzelement-Vorformlinge* nach der Durchführung aller angewendeten Verfahrensschritte des erfindungsgemäßen Verfahrens in der fertigen antiresonanten Hohlkernfaser. Das bedeutet, dass *Antiresonanzelement-Vorformlinge,* wie *Kapillaren* oder *Kapillaren,* die beispielsweise in einem *nested-Design* angeordnet worden sind, in der Form von *Antiresonanzelementen,* ihre geometrischen Merkmale, wie zum Beispiel Innen- oder Außendurchmesser, oder ihre Länge, nicht mehr durch weitere Verfahrensschritte des erfindungsgemäßen Verfahrens verändern.

Im Sinne der vorliegenden Erfindung bezeichnet der Begriff *Hülllrohr* ein Objekt, welches eine Hüllrohr-Innenbohrung und eine Hüllrohr-Längsachse aufweist, entlang der sich eine von einer Innenhüllrohrfläche und einer Außenhüllrohrflache begrenzte Hüllrohr-Wandung erstreckt. Das *Hüllrohr* im Sinne der Erfindung ist neben den *Antiresonanzelement-Vorformlingen* Bestandteil von *primären Vorformlingen (Stacks).*

Im Sinne der vorliegenden Erfindung bezeichnet der Begriff *primärer Vorformling* oder "*Stack*" ein solches *Halbzeug,* bei dem mindestens eine Art von *Antiresonanzelement-Vorformlingen* in mindestens einem *Hüllrohr* platziert worden ist. Der *Antiresonanzelement-Vorformling* oder die *Antiresonanzelement-Vorformlinge* sind dabei noch nicht vollständig in dem *Hüllrohr* fixiert, sondern sie sind lediglich an den beiden Enden des *Hüllrohrs* befestigt, beispielsweise mittels einer geeigneten Klebemasse oder durch Verschmelzungen. Es ist ebenfalls möglich, eine geeignete Vorrichtung oder Schablone, an welche die *Antiresonanzelement-Vorformlinge* angeschraubt werden, zu benutzen, um die *Antiresonanzelement-Vorformlinge* kraftschlüssig im Hüllrohr-Innenraum zu befestigen. Es ist prinzipiell möglich, den fertigen *primären Vorformling* oder den "*Stack*" mittels *Faserzug* bis zur antiresonanten Hohlkernfaser zu verarbeiten.

Im Sinne der vorliegenden Erfindung bezeichnet der Begriff *primäre Vorform* oder "*Cane*" ein solches *Halbzeug* des erfindungsgemäßen Verfahrens, bei welchem ein *primärer Vorformling* mindestens einem *Kollabierungs-* oder *Kollabierungs- und Elongierungsschritt,* gegebenenfalls gleichzeitig oder sukzessive ausgeführt, unterzogen worden ist. Im Sinne des erfindungsgemäßen Verfahrens erfolgt ein *Kollabierungs-* oder *Kollabierungs- und Elongierungsschritt* insbesondere unter thermischer Einwirkung in einem Zugverfahren als Heißformprozessschritt. Es ist prinzipiell möglich, die fertige *primäre Vorform* oder den *Cane* mittels eines *Faserzugs* bis zur antiresonanten Hohlkernfaser zu verarbeiten.

Im Sinne der vorliegenden Erfindung bezeichnet der Begriff *Mantelrohr* ein Objekt, welches auch als "Zylinder" oder "Jacket" aufgefasst werden kann. Es weist eine Mantelrohr-Innenbohrung und eine Mantelrohr-Längsachse auf, entlang der sich eine von einer Innenmantelfläche und einer Außenmantelfäche begrenzte Mantelrohr-Wandung erstreckt. Im Gegensatz zum *Hüllrohr* als Bestandteil des *primären Vorformlings* oder der *primären Vorform* wird das *Mantelrohr* beispielsweise auf den bestehenden *primären Vorformling* oder die bestehende *primäre Vorform aufkollabiert,* um dann eine *finale Vorform* oder eine *sekundäre Vorform* zu bilden. Es ist ebenfalls erfindungsgemäß neben dem *Aufkollabieren* des *Mantelrohrs* auf die *primäre Vorform* oder den *primären Vorformling* im selben Schritt den *Faserzug* durchzuführen, indem während des *Aufkollabierens* immer weiter *kollabiert* und *elongiert* wird.

Im Sinne der Erfindung bezeichnet der Begriff *Baueinheit* ein System, bei welchem ein *primärer Vorformling* bzw. ein *Stack* oder eine *primäre Vorform* bzw. ein *Cane* in die Mantelrohr-Innenbohrung eines *Mantelrohrs* eingeführt worden ist, sodass die Außenhüllrohrfläche und die Innenmantelrohrfläche einander zugewandt sind. Erfindungsgemäß können davon ausgehend *Aufkollabierungs-* und/oder *Elongierungsschritte,* gegebenenfalls gleichzeitig oder sukzessive ausgeführt, zu weiteren *Halbzeugen* oder zur antiresonanten Hohlkernfaser führen.

Im Sinne der vorliegenden Erfindung bezeichnet der Begriff *sekundäre Vorform* das Ergebnis mindestens eines Heißformprozessschrittes des erfindungsgemäßen Verfahrens der an einer *primären Vorform* bzw. einem Cane oder an einem *primären Vorformling* bzw. *Stack* ausgeführt wird, worin ein *Mantelrohr* auf den *primären Vorformling* oder die *primäre Vorform* aufkollabiert worden ist. Es ist erfindungsgemäß möglich, dass die *sekundäre Vorform* direkt per *Faserzug* zu einer antiresonanten Hohlkernfasern weiterverarbeitet wird. Es ist aber ebenfalls erfindungsgemäß, wenn die *sekundäre Vorform,* gegebenenfalls auf einer anderen Anlage als der, auf welcher die *sekundäre Vorform* hergestellt worden ist, erst zu einem anderen *Halbzeug,* wie einer *finalen Vorform,* und dann zu einer antiresonanten Hohlkernfaser weiterverarbeitet wird. Sie kann beispielsweise nur *kollabiert, kollabiert* und gleichzeitig *elongiert* oder *kollabiert* und anschließend *elongiert* und zu einer *finalen Vorform* weiterverarbeitet werden. Die Weiterverarbeitung der *sekundären Vorform* zu einer *finalen Vorform* ist erfindungsgemäß bevorzugt.

Im Sinne der vorliegenden Erfindung bezeichnet der Begriff *finale Vorform* das Ergebnis mindestens eines Heißformprozessschrittes des erfindungsgemäßen Verfahrens, der an einem *primären Vorformling* (Stack), auf welchen ein *Mantelrohr aufkollabiert* worden ist, einer *primären Vorform* (Cane), auf welche ein *Mantelrohr aufkollabiert* worden ist, oder einer *sekundären Vorform* ausgeführt wird, wobei das jeweilige *Halbzeug kollabiert, kollabiert* und gleichzeitig *elongiert* oder *kollabiert* und im Anschluss *elongiert* wird.

Wenn im Sinne der vorliegenden Erfindung von explizit bezeichneten Zahlenwerten in einem Bereich von X bis Y oder von mindestens X bis mindestens Y oder von größer als X bis größer als Y etc. die Rede ist, sind damit insbesondere auch alle implizit dazwischen liegenden Werte erfasst, die durch die Angabe der Nullstellen suggeriert werden. Liegt ein Wert also zwischen 1 und 10 sind damit insbesondere auch 2, 3, 4, 5, 6, 7, 8, und 9 mit umfasst. Liegt ein Wert zwischen 1,0 und 2,0 sind damit insbesondere auch 1,1, 1,2, 1,3, 1,4, 1,5, 1,6, 1,7, 1,8 und 1,9 mit umfasst. Liegt ein Wert zwischen 1,00 und 1,10 sind damit insbesondere auch 1,01, 1,02, 1,03, 1,04, 1,05, 1,06, 1,07, 1,08 und 1,09 mit umfasst.

## II. Verfahren

Das erfindungsgemäße Verfahren ist ein Herstellverfahren für antiresonante Hohlkernfasern, welches insbesondere durch die verhältnismäßig großen Dimensionen der Antiresonanzelement-Vorformlinge und Halbzeuge, die im Zuge des Verfahrens als Zwischenprodukte nach den diversen erfindungsgemäßen Verfahrensschritten durchlaufen werden, gekennzeichnet ist.

Die einfachste Ausführungsform des erfindungsgemäßen Verfahrens zur Herstellung einer antiresonanten Hohlkernfaser, die einen sich entlang einer Faser-Längsachse erstreckenden Hohlkern und einen den Hohlkern umgebenden Mantelbereich aufweist, der mehrere Antiresonanzelemente umfasst, weist die folgenden mindestens einmalig ausgeführten Verfahrensschritte auf:

a) Bereitstellen eines primären Vorformlings (Stack), umfassend mindestens ein Hüllrohr, das eine Hüllrohr-Innenbohrung und eine Hüllrohr-Längsachse aufweist, entlang der sich eine von einer Innenhüllrohrfläche und einer Außenhüllrohrfläche begrenzte Hüllrohr-Wandung erstreckt, und Antiresonanzelement-Vorformlinge; und Bereitstellen mindestens eines Mantelrohrs, das eine Mantelrohr-Innenbohrung und eine Mantelrohr-Längsachse aufweist, entlang der sich eine von einer Innenmantelfläche und einer Außenmantelfläche begrenzte Mantelrohr-Wandung erstreckt, und Einfügen des primären Vorformlings (Stack) in das Mantelrohr; und

b) Durchführen eines Faserzugs bei gleichzeitigem Aufkollabieren des Mantelrohrs.

Dadurch gekennzeichnet, dass das Mantelrohr einen Außendurchmesser von 100 mm bis 240 mm aufweist.

Es ist im Sinne des erfindungsgemäßen Verfahrens bevorzugt, wenn die Schritte a) und b) auf derselben Anlage ausgeführt werden. Auf diese Weise wird das erfindungsgemäße Verfahren für die Herstellung von antiresonanten Hohlkernfasern im industriellen Maßstab attraktiver.

Um das erfindungsgemäße Verfahren insbesondere im industriellen Maßstab ausführen zu können, ist es vorteilhaft, wenn die Halbzeuge oder der primäre Vorformling verhältnismäßig groß dimensioniert sind. Insbesondere sind große Außen- und Innendurchmesser von Hüll- und Mantelrohren, aber auch von Antiresonanzelement-Vorformlingen vorteilhaft.

Im Sinne des erfindungsgemäßen Verfahrens sind Hüllrohre, die Bestandteil von primären Vorformlingen bzw. Stacks werden, 600 mm bis 1000 mm lang. Das bedeutet, die Hüllrohre sind beispielsweise 600 mm, 610 mm, 620 mm, 630 mm, 640 mm, 650 mm, 660, mm, 670, mm, 680 mm, 690 mm oder beispielsweise 700 mm, 710 mm, 720 mm, 730 mm, 740 mm, 750 mm, 760, mm, 770, mm, 780 mm, 790 mm oder beispielsweise 800 mm, 810 mm, 820 mm, 830 mm, 840 mm, 850 mm, 860, mm, 870, mm, 880 mm, 890 mm oder beispielsweise 900 mm, 910 mm, 920 mm, 930 mm, 940 mm, 950 mm, 960, mm, 970, mm, 980 mm, 990 mm oder beispielsweise 1000 mm lang.

Des Weiteren weisen die Hüllrohre, die Bestandteil von primären Vorformlingen bzw. Stacks werden, Innendurchmesser von 25 mm bis 80 mm auf. Das bedeutet, die Hüllrohre weisen einen Innendurchmesser von beispielsweise 25 mm, 26 mm, 27 mm, 28 mm, 29 mm oder beispielsweise 30 mm, 31 mm, 32 mm, 33 mm, 34 mm, 35 mm, 36 mm, 37 mm, 38 mm, 39 mm oder beispielsweise 40 mm, 41 mm, 42 mm, 43 mm, 44 mm, 45 mm, 46 mm, 47 mm, 48 mm, 49 mm oder beispielsweise 50 mm, 51 mm, 52 mm, 53 mm, 54 mm, 55 mm, 56 mm, 57 mm, 58 mm, 59 mm oder beispielsweise 60 mm, 61 mm, 62 mm, 63 mm, 64 mm, 65 mm, 66 mm, 67 mm, 68 mm, 69 mm oder beispielsweise 70 mm, 71 mm, 72 mm, 73 mm, 74 mm, 75 mm, 76 mm, 77 mm, 78 mm, 79 mm oder beispielsweise 80 mm auf.

Des Weiteren weisen die Hüllrohre, die Bestandteil von primären Vorformlingen bzw. Stacks werden, Außendurchmesser von 41 mm bis 100 mm auf. Das bedeutet, die Hüllrohre weisen einen Innendurchmesser von beispielsweise 41 mm, 42 mm, 43 mm, 44 mm, 45 mm, 46 mm, 47 mm, 48 mm, 49 mm oder beispielsweise 50 mm, 51 mm, 52 mm, 53 mm, 54 mm, 55 mm, 56 mm, 57 mm, 58 mm, 59 mm oder beispielsweise 60 mm, 61 mm, 62 mm, 63 mm, 64 mm, 65 mm, 66 mm, 67 mm, 68 mm, 69 mm oder beispielsweise 70 mm, 71 mm, 72 mm, 73 mm, 74 mm, 75 mm, 76 mm, 77 mm, 78 mm, 79 mm oder beispielsweise 80 mm, 81 mm, 82 mm, 83 mm, 84 mm, 85 mm, 86 mm, 87 mm, 88 mm, 89 mm oder beispielsweise 90 mm, 91 mm, 92 mm, 93 mm, 94 mm, 95 mm, 96 mm, 97 mm, 98 mm, 99 mm oder beispielsweise 100 mm auf.

Des Weiteren weisen die Hüllrohre, die Bestandteil von primären Vorformlingen bzw. Stacks werden, Wandstärken von 4 mm bis 25 mm auf. Das bedeutet, die Hüllrohre weisen eine Wandstärke von beispielsweise 4mm, 5 mm, 6 mm, 7 mm, 8 mm, 9 mm oder beispielsweise 10 mm, 11 mm, 12 mm, 13 mm, 14 mm, 15 mm, 16 mm, 17 mm, 18 mm, 19 mm oder beispielsweise 20 mm, 21 mm, 22 mm, 23 mm, 24 mm, oder beispielsweise 25 auf.

Des Weiteren weisen die Hüllrohre, die Bestandteil von primären Vorformlingen bzw. Stacks werden, einen Innenumfang der Hüllrohr-Innenbohrung von 100,0 mm bis 500,0 mm auf. Das bedeutet, die Hüllrohre weisen einen Innenumfang der Hüllrohr-Innenbohrung von beispielsweise 100,0 mm, 110,0 mm, 120,0 mm, 130,0 mm, 140,0 mm, 150,0 mm, 160,0 mm, 170,0 mm, 180,0 mm, 190,0 mm oder beispielsweise von 200,0 mm, 210,0 mm, 220,0 mm, 230,0 mm, 240,0 mm, 250,0 mm, 260,0 mm, 270,0 mm, 280,0 mm, 290,0 mm oder beispielsweise von 300,0 mm, 310,0 mm, 320,0 mm, 330,0 mm, 340,0 mm, 350,0 mm, 360,0 mm, 370,0 mm, 380,0 mm, 390,0 mm oder beispielsweise von 400,0 mm, 410,0 mm, 420,0 mm, 430,0 mm, 440,0 mm, 450,0 mm, 460,0 mm, 470,0 mm, 480,0 mm, 490,0 mm oder beispielsweise von 500,0 mm auf.

Im Sinne des erfindungsgemäßen Verfahrens weisen Kapillaren, die Bestandteil von primären Vorformlingen bzw. Stacks oder von anderen Antiresonanzelement-Vorformlingen werden, einen Außendurchmesser von 2,50 mm bis 30,00 mm auf. Das bedeutet, sie weisen einen Außendurchmesser von beispielsweise 2,50 mm, 3,00 mm, 3,50 mm, 4,00 mm, 4,50 mm oder beispielsweise von 5,00 mm, 5,50 mm, 6,00 mm, 6,50 mm, 7,00 mm, 7,50 mm, 8,00 mm, 8,50 mm, 9,00 mm, 9,50 mm oder beispielsweise von 10,00 mm, 10,50 mm, 11,00 mm, 11,50 mm, 12,00 mm, 12,50 mm, 13,00 mm, 13,50 mm, 14,00 mm, 14,50 mm oder beispielsweise von 15,00 mm 15,50 mm, 16,00 mm, 16,50 mm, 17,00 mm, 17,50 mm, 18,00 mm, 18,50 mm, 19,00 mm, 19,50 mm oder beispielsweise von 20,00 mm, 20,50 mm, 21,00 mm, 21,50 mm, 22,00 mm, 22,50 mm, 23,00 mm, 23,50 mm, 24,00 mm, 24,50 mm oder beispielsweise von 25,00 mm 25,50 mm, 26,00 mm, 26,50 mm, 27,00 mm, 27,50 mm, 28,00 mm, 28,50 mm, 29,00 mm, 29,50 mm oder beispielsweise von 30,00 mm auf.

Die Antiresonanzelement-Vorformlinge im Sinne der Erfindung verändern Ihre Durchmesser, ihre Länge und ggf. auch andere Geometrieparameter, wenn sie im Zuge des erfindungsgemäßen Verfahrens verarbeitet werden. Dennoch sind sie dadurch gekennzeichnet, dass ihre Außendurchmesser verhältnismäßig groß bleiben.

Wird aus Bestandteilen dieser Größenordnung ein primärer Vorformling bzw. Stack und gegebenenfalls in anderen Verfahrensschritten eine primäre Vorform bzw. ein Cane hergestellt, ist eine höhere Winkelgenauigkeit bzw. geringere Winkelabweichung möglich, da sich bei einem größeren Innendurchmesser das Verhältnis zwischen Umfang (in mm) und Winkelgrad (°)erhöht. Das bedeutet, dass sich bei gleichbleibender absoluter Positionsgenauigkeit bzw. gleichbleibender Abweichung von der Sollposition und bei steigendem Innendurchmesser die Winkelgenauigkeit verbessert, die Winkelabweichung also verringert ist. Die Winkelabweichung kann anhand der folgenden Formel bestimmt werden:

$$Winkelabweichung = \frac{360° \times Positionsabweichung\ [mm]}{Innendurchmesser\ [mm] \times \pi}$$

Dadurch wiederum werden während etwaig ausgeführten Verfahrensschritten, die Heißformprozessschritte wie Kollabieren, Aufkollabieren und Elongieren umfassen, sogenannte Mid-Draw-Contacts minimiert. Der Begriff Mid-Draw-Contact bezeichnet eine unerwünschte Berührung der Antiresonanzelement-Vorformlinge während eines Heißformprozesschrittes, der gegebenenfalls die Führungseigenschaften der Faser verschlechtert oder die Lichtführung in der Faser komplett verhindert.

Im Sinne der Erfindung beträgt die Winkelabweichung zwischen dem Innendurchmesser des Hüllrohrs und den Antiresonanzelement-Vorformlingen zwischen 0,050° und 4,000°. Die Winkelabweichung beträgt also beispielsweise 0,050°, 0,100°, 0,150° 0,200°, 0,250°, 0,300°, 0,350°, 0,400°, 0,450°, 0,500°, 0,550°, 0,600°, 0,650°, 0,700°, 0,750°, 0,800°, 0,850°, 0,900°, 0,950° oder 1,000°, 1,050°, 1,100°, 1,150° 1,200°, 1,250°, 1,300°, 1,350°, 1,400°, 1,450°, 1,500°, 1,550°, 1,600°, 1,650°, 1,700°, 1,750°, 1,800°, 1,850°, 1,900°, 1,950° oder 2,000°, 2,050°, 2,100°, 2,150° 2,200°, 2,250°, 2,300°, 2,350°, 2,400°, 2,450°, 2,500°, 2,550°, 2,600°, 2,650°, 2,700°, 2,750°, 2,800°, 2,850°, 2,900°, 2,950° oder 3,000°, 3,050°, 3,100°, 3,150° 3,200°, 3,250°, 3,300°, 3,350°, 3,400°, 3,450°, 3,500°, 3,550°, 3,600°, 3,650°, 3,700°, 3,750°, 3,800°, 3,850°, 3,900°, 3,950° oder 4,000°.

Ein weiterer Vorteil, der mittels solcher verhältnismäßig großen Bestandteile für primäre Vorformlinge bzw. primäre Vorformen des erfindungsgemäßen Verfahrens verwirklicht werden kann, ist, dass eine größere Steifigkeit der primären Vorform bzw. des primären Vorformlings erreicht werden kann. Dadurch wird das Risiko von Bruch oder anderen Beschädigungen während der erfindungsgemäßen Verfahrensschritte minimiert.

Ein weiterer Vorteil, der mittels solcher verhältnismäßig großen Bestandteile für primäre Vorformlinge bzw. primäre Vorformen des erfindungsgemäßen Verfahrens verwirklicht werden kann, ist, dass große Durchmesser in Antiresonanzelement-Vorformlingen den angelegten Gleichgewichtsdruck ($p_{GGW}$) verringern, der nötig ist, um die Antiresonanzelement-Vorformlinge während der angewendeten Verarbeitungsschritte zu stabilisieren und ihr unerwünschtes deformieren oder gar vollständiges Kollabieren zu verhindern. Der Zusammenhang zwischen dem Gleichgewichtsdruck und dem Krümmungsradius der Antiresonanzelement-Vorformlinge sowie dem Materialparameter Oberflächenspannung wird durch den folgenden Zusammenhang verdeutlicht:

$$p_{GGW} = \left(\frac{1}{r_A^2} + \frac{1}{r_i^2}\right) * \eta$$

worin $r_A$ den Außenradius der Antiresonanzelement-Vorformlinge und $r_i$ den Innenradius der Antiresonanzelement-Vorformlinge sowie $\eta$ die Oberflächenspannung des verwendeten Materials bezeichnet.

Durch die von vornherein verhältnismäßig großen Antiresonanzelement-Vorformlinge, mit einem großen Außen bzw. Innendurchmesser, wird sichergestellt, dass das Kollabieren der Antiresonanzelement-Vorformlinge im Verarbeitungsprozess weniger stark ausfällt.

Ein weiterer Vorteil, der mittels solcher verhältnismäßig großen Bestandteile für primäre Vorformlinge bzw. primäre Vorformen des erfindungsgemäßen Verfahrens verwirklicht werden kann, ist, dass große Durchmesser in Antiresonanzelement-Vorformlingen bzw. Kapillaren es ermöglicht, dass ein Anschluss für einen gegebenenfalls erzeugten Innendruck bzw. Gegendruck zur Stabilisierung der Antiresonanzelement-Vorformlinge vereinfacht ist.

Ein weiterer Aspekt des erfindungsgemäßen Verfahrens ist es, dass auf den primären Vorformling oder aber auf die primäre Vorform mindestens ein Mantelrohr aufkollabiert wird. Mantelrohre, die im Zuge des erfindungsgemäßen Verfahrens auf primäre Vorformlinge oder primäre Vorformen aufkollabiert werden, weisen eine Länge zwischen 1500 mm und 3200 mm auf. Sie weisen also beispielsweise eine Länge von 1500 mm, 1510 mm, 1520 mm, 1530 mm, 1540 mm, 1550 mm, 1560 mm, 1570 mm, 1580 mm, 1590 mm oder beispielsweise 1600 mm, 1610 mm, 1620 mm, 1630 mm, 1640 mm, 1650 mm, 1660 mm, 1670 mm, 1680 mm, 1690 mm oder beispielsweise 1700 mm, 1710 mm, 1720 mm, 1730 mm, 1740 mm, 1750 mm, 1760 mm, 1770 mm, 1780 mm, 1790 mm oder beispielsweise 1800 mm, 1810 mm, 1820 mm, 1830 mm, 1840 mm, 1850 mm, 1860 mm, 1870 mm, 1880 mm, 1890 mm oder beispielsweise 1900 mm, 1910 mm, 1920 mm, 1930 mm, 1940 mm, 1950 mm, 1960 mm, 1970 mm, 1980 mm, 1990 mm oder beispielsweise 2000 mm, 2010 mm, 2020 mm, 2030 mm, 2040 mm, 2050 mm, 2060 mm, 2070 mm, 2080 mm, 2090 mm oder beispielsweise 2100 mm, 2110 mm, 2120 mm, 2130 mm, 2140 mm, 2150 mm, 2160 mm, 2170 mm, 2180 mm, 2190 mm oder beispielsweise 2200 mm, 2210 mm, 2220 mm, 2230 mm, 2240 mm, 2250 mm, 2260 mm, 2270 mm, 2280 mm, 2290 mm oder beispielsweise 2300 mm, 2310 mm, 2320 mm, 2330 mm, 2340 mm, 2350 mm, 2360 mm, 2370 mm, 2380 mm, 2390 mm oder beispielsweise 2400 mm, 2410 mm, 2420 mm, 2430 mm, 2440 mm, 2450 mm, 2460 mm, 2470 mm, 2480 mm, 2490 mm oder beispielsweise 2500 mm, 2510 mm, 2520 mm, 2530 mm, 2540 mm, 2550 mm, 2560 mm, 2570 mm, 2580 mm, 2590 mm oder beispielsweise 2600 mm, 2610 mm, 2620 mm, 2630 mm, 2640 mm, 2650 mm, 2660 mm, 2670 mm, 2680 mm, 2690 mm oder beispielsweise 2700 mm, 2710 mm, 2720 mm, 2730 mm, 2740 mm, 2750 mm, 2760 mm, 2770 mm, 2780 mm, 2790 mm oder beispielsweise 2800 mm, 2810 mm, 2820 mm, 2830 mm, 2840 mm, 2850 mm, 2860 mm, 2870 mm, 2880 mm, 2890 mm oder beispielsweise 2900 mm, 2910 mm, 2920 mm, 2930 mm, 2940 mm, 2950 mm, 2960 mm, 2970 mm, 2980 mm, 2990 mm oder beispielsweise 3000 mm, 3010 mm, 3020 mm, 3030 mm, 3040 mm, 3050 mm, 3060 mm, 3070 mm, 3080 mm, 3090 mm oder beispielsweise 3100 mm, 3110 mm, 3120 mm, 3130 mm, 3140 mm, 3150 mm, 3160 mm, 3170 mm, 3180 mm, 3190 mm oder beispielsweise 3200 mm auf.

Des Weiteren weisen die Mantelrohre, von denen mindestens eines auf primäre Vorformlinge bzw. Stacks oder primäre Vorformen aufkollabiert werden kann, Außendurchmesser von 100 mm bis 240 mm auf. Das bedeutet, der Außendurchmesser beträgt beispielsweise 100 mm, 110 mm, 120 mm, 130 mm, 140 mm, 150 mm, 160 mm, 170 mm, 180 mm, 190 mm oder beispielsweise 200 mm, 210 mm, 220 mm, 230 mm oder 240 mm.

Es ist im Sinne des erfindungsgemäßen Verfahrens insbesondere bevorzugt, wenn das Mantelrohr einen Außendurchmesser von größer als 120 mm aufweist.

Das Aufkollabieren von mindestens einem Mantelrohr auf den primären Vorformling oder auf die primäre Vorform birgt den Vorteil, dass die Antiresonanzelement-Vorformlinge so in einer besonders dickwandigen Hülle vor den hohen Temperaturen, die während der Heißformprozessschritte üblicherweise angewandt werden, vorzugsweise geschützt werden. Dadurch wird die Gefahr ihrer Beschädigung während des Formprozesses vorzugsweise weiter minimiert.

Im Sinne des erfindungsgemäßen Verfahrens wird das Mantelrohr bevorzugt in Form eines Zylinders zur Verfügung gestellt.

Es ist im Sinne des erfindungsgemäßen Verfahrens bevorzugt, wenn das Aufkollabieren des Mantelrohrs unter Anwendung eines Unterdrucks bzw. Ziehen eines Vakuums zwischen der Mantelrohrinnenfläche und der Außenfläche des primären Vorformlings oder der primären Vorform erfolgt. Dabei wird der primäre Vorformling bzw. die primäre Vorform druckseitig separiert, damit das Vakuum angelegt werden kann. Erfindungsgemäß ist dies beispielsweise durch das stirnseitige Zuschmelzen oder das stirnseitige Aufbringen einer geeigneten Abdichtmasse möglich.

Die Verwendung von einem oder mehreren Mantelrohren anstatt der Verwendung eines einzelnen, dickwandigen Hüllrohrs birgt den Vorteil, dass eine dickwandige Vorform erhalten werden kann, ohne dass das Risiko besteht, das Hüllrohr bei der thermischen Fixierung der Antiresonanzelement-Vorformlinge zu beschädigen. Wird von vorneherein ein zu großes Hüllrohr verwendet, kann beim Anschweißen Antiresonanzelement-Vorformlinge ungleichmäßige Wärmeverteilung auftreten, was zu Rissen führen kann.

Eine weitere bevorzugte Ausführungsform des erfindungsgemäßen Verfahrens zur Herstellung einer antiresonanten Hohlkernfaser, die einen sich entlang einer Faser-Längsachse erstreckenden Hohlkern und einen den Hohlkern umgebenden Mantelbereich aufweist, der mehrere Antiresonanzelemente umfasst, weist die folgenden mindestens einmalig ausgeführten Verfahrensschritte auf:

a) Bereitstellen eines primären Vorformlings umfassend mindestens ein Hüllrohr das eine Hüllrohr-Innenbohrung und eine Hüllrohr-Längsachse aufweist, entlang der sich eine von einer Innenhüllrohrfläche und einer Außenhüllrohrfläche begrenzte Hüllrohr-Wandung erstreckt, und umfassend Antiresonanzelement-Vorformlinge; und

Weiterverarbeiten des primären Vorformlings zu einer primären Vorform (Cane) durch

i) Kollabieren, oder
ii) Kollabieren und gleichzeitiges Elongieren, oder
iii) Kollabieren und anschließendes Elongieren; und

b) Bereitstellen mindestens eines Mantelrohrs, das eine Mantelrohr-Innenbohrung und eine Mantelrohr-Längsachse aufweist, entlang der sich eine von einer Innenmantelfläche und einer Außenmantelfläche begrenzte Mantelrohr-Wandung erstreckt; und

Einfügen der primären Vorform in das Mantelrohr durch Aufkollabieren; und

c) Durchführen eines Faserzugs.

Dadurch gekennzeichnet, dass das Mantelrohr einen Außendurchmesser von 100 mm bis 240 mm aufweist.

Dabei ist es im Sinne der Erfindung insbesondere bevorzugt, wenn das Aufkollabieren des Mantelrohrs auf die primäre Vorform und der Faserzug auf derselben Anlage ausgeführt werden.

Die Fertigung einer primären Vorform vor dem Aufkollabieren von mindestens einem Mantelrohr führt vorzugsweise zu einem geringeren Beschädigungsrisiko der Antiresonanzelement-Vorformlinge gegenüber dem Aufkollabieren von mindestens einem Mantelrohr auf einen primären Vorformling. In einem primären Vorformling sind die Antiresonanzelement-Vorformlinge üblicherweise noch nicht vollständig im Hüllrohr fixiert, sondern sie sind lediglich an den Enden des Hüllrohres befestigt. Wird zunächst eine primäre Vorform aus dem primären Vorformling geformt, sind die Antiresonanzelement-Vorformlinge im Hüllrohr fixiert und besser gegen mechanische Schwingungen, die gegebenenfalls beim Aufkollabieren eines Mantelrohrs auftreten können, geschützt.

Im Sinne der Erfindung weisen primäre Vorformen mindestens dieselben Dimensionen auf, wie das Hüllrohr, das Bestandteil der primären Vorform geworden ist, sie können erfindungsgemäß aber insbesondere im Durchmesser verringert und in der Länge erweitert worden sein.

Damit weisen primäre Vorformen also beispielsweise eine Länge von größer als 600 mm bis größer als 3000 mm auf, also beispielsweise größer als 600 mm, 610 mm, 620 mm, 630 mm, 640 mm, 650 mm, 660, mm, 670, mm, 680 mm, 690 mm oder beispielsweise größer als von 700 mm, 710 mm, 720 mm, 730 mm, 740 mm, 750 mm, 760, mm, 770, mm, 780 mm, 790 mm oder beispielsweise größer als 800 mm, 810 mm, 820 mm, 830 mm, 840 mm, 850 mm, 860, mm, 870, mm, 880 mm, 890 mm oder beispielsweise größer als 900 mm, 910 mm, 920 mm, 930 mm, 940 mm, 950 mm, 960, mm, 970, mm, 980 mm, 990 mm oder beispielsweise größer als 1000 mm, 1100 mm, 1200 mm, 1300 mm, 1400 mm, 1500 mm, 1600 mm, 1700 mm, 1800 mm, 1900 mm oder beispielsweise größer als 2000 mm, 2100 mm, 2200 mm, 2300 mm, 2400 mm, 2500 mm, 2600 mm, 2700 mm, 2800 mm, 2900 mm oder beispielsweise größer als 3000 mm lang. Bevorzugt ist die primäre Vorform größer als 1000 mm lang. Da die primäre Vorform erfindungsgemäß gegenüber dem primären Vorformling elongiert werden kann, ist sie üblicher-, aber nicht notwendigerweise, länger.

Des Weiteren weisen primäre Vorformen Außendurchmesser von größer als 24 mm auf. Das bedeutet, die Hüllrohre weisen einen Innendurchmesser von beispielsweise mindestens 24 mm, 25 mm, 26 mm, 27 mm, 28 mm, 29 mm, 30 mm, 31 mm, 32 mm, 33 mm, 34 mm, 35 mm, 36 mm, 37 mm, 38 mm, 39 mm oder beispielsweise mindestens 40 mm, 41 mm, 42 mm, 43 mm, 44 mm, 45 mm, 46 mm, 47 mm, 48 mm, 49 mm oder beispielsweise mindestens 50 mm, 51 mm, 52 mm, 53 mm, 54 mm, 55 mm, 56 mm, 57 mm, 58 mm, 59 mm oder beispielsweise mindestens 60 mm, 61 mm, 62 mm, 63 mm, 64 mm, 65 mm, 66 mm, 67 mm, 68 mm, 69 mm oder beispielsweise mindestens 70 mm, 71 mm, 72 mm, 73 mm, 74 mm, 75 mm, 76 mm, 77 mm, 78 mm, 79 mm oder beispielsweise mindestens 80 mm, 81 mm, 82 mm, 83 mm, 84 mm, 85 mm, 86 mm, 87 mm, 88 mm, 89 mm oder beispielsweise mindestens 90 mm, 91 mm, 92 mm, 93 mm, 94 mm, 95 mm, 96 mm, 97 mm, 98 mm, 99 mm oder beispielsweise mindestens 100 mm auf. Da die primäre Vorform erfindungsgemäß gegenüber dem primären Vorformling kollabiert werden kann, weist sie einen geringeren Außendurchmesser auf.

Des Weiteren weisen primäre Vorformen Wandstärken von größer als 4 mm auf. Das bedeutet, die Hüllrohre weisen eine Wandstärke von beispielsweise mindestens 4 mm, 5 mm, 6 mm, 7 mm, 8 mm, 9 mm oder beispielsweise mindestens 10 mm, 11 mm, 12 mm, 13 mm, 14 mm, 15 mm, 16 mm, 17 mm, 18 mm, 19 mm oder beispielsweise mindestens 20 mm, 21 mm, 22 mm, 23 mm, 24 mm, 25 mm, 26 mm, 27 mm, 28 mm, 29 mm oder beispielsweise mindestens 30 mm, 31 mm, 32 mm, 33 mm, 34 mm, 35 mm, 36 mm, 37 mm, 38 mm, 39 mm oder beispielsweise mindestens 40 mm, 41 mm, 42 mm, 43 mm, 44 mm, 45 mm, 46 mm, 47 mm, 48 mm, 49 mm oder beispielsweise mindestens 50 mm, 51 mm, 52 mm, 53 mm, 54 mm, 55 mm, 56 mm, 57 mm, 58 mm, 59 mm oder beispielsweise mindestens 60 mm, 61 mm, 62 mm, 63 mm, 64 mm, 65 mm, 66 mm, 67 mm, 68 mm, 69 mm oder beispielsweise mindestens 70 mm, 71 mm, 72 mm, 73 mm, 74 mm oder beispielsweise mindestens 75 mm, auf. Da die primäre Vorform erfindungsgemäß gegenüber dem primären Vorformling kollabiert werden kann, weist sie eine geringere Wandstärke auf.

Es ist im Sinne des erfindungsgemäßen Verfahrens denkbar, dass die Antiresonanzelement-Vorformlinge wie Kapillaren oder beispielsweise Kapillaren, die im nested-Design oder einer anderen denkbaren Anordnung angeordnet sind, bei der Verarbeitung des primären Vorformlings zur primären Vorform ihre geometrischen Eigenschaften wie Außen- oder Innendurchmesser, Länge oder Ovalität verändern. Durch die Heißformprozessschritte die erforderlich sind, um aus einem primären Vorformling eine primäre Vorform zu erhalten oder auch durch die Heißformprozessschritte die erforderlich sind, um aus einer primären Vorform ein anderes Halbzeug herzustellen wird die Geometrie der Antiresonanzelement-Vorformlinge ebenfalls beeinflusst.

Prinzipiell sind Kapillaren oder andere Antiresonanzelement-Vorformlinge zunächst kreisrund und eine kreisrunde Geometrie ist für sie bevorzugt. Bei Heißformprozessschritten kann die runde Form des Querschnitts der Kapillaren oder anderen Antiresonanzelement-Vorformlinge jedoch eine ovale Form annehmen, die durch eine lange Achse und durch eine kurze Achse gekennzeichnet ist. Der Außendurchmesser einer solchen, eher ovalen Kapillare oder eines solchen Antiresonanzelement-Vorformlings ergibt sich dann gemäß der folgenden Formel:

$$Außendurchmesser = \frac{l_{Lange\ Achse}[mm] + l_{Kurze\ Achse}[mm]}{2}$$

Es ist im Sinne der Erfindung bevorzugt, wenn die Achsenlängen entsprechend einem erfindungsgemäß bevorzugten Verhältnis zwischen der langen und der kurzen Achse von 1,00 (kreisrund) bis maximal 2,00 (oval) liegen. Dabei ergibt sich das Verhältnis zwischen den Achsen also nach der folgenden Formel:

$$Verhältnis_{Achsen} = \frac{l_{Lange\ Achse}[mm]}{l_{Kurze\ Achse}[mm]}$$

Das bedeutet, das Verhältnis zwischen der langen und der kurzen Achse liegt erfindungsgemäß bei 1,00, 1,05, 1,10, 1,15, 1,20, 1,25 oder 1,30, 1,35, 1,40, 1,45, 1,50, oder 1,55, 1,60, 1,65, 1,70, 1,75, oder 1,80, 1,85, 1,90, 1,95 oder 2,00. Besonders Bevorzugt liegt das Verhältnis maximal zwischen 1,20 und 1,60.

Es ist erfindungsgemäß denkbar, dass Kapillaren direkt Bestandteil eines primären Vorformlings oder einer primären Vorform werden, ohne, dass sie zu einem anderen Antiresonanzelement-Vorformling, wie einer Anordnung von Kapillaren im nested-Design, verarbeitet werden.

Es ist dementsprechend besonders bevorzugt, wenn eine Kapillare, die Bestandteil einer primären Vorform geworden sind, einen Außendurchmesser von mindestens 2,00 mm aufweist, also beispielsweise 2,00 mm, 2,50 mm, 3,00 mm, 3,50 mm, 4,00 mm, 4,50 mm oder beispielsweise von 5,00 mm, 5,50 mm, 6,00 mm, 6,50 mm, 7,00 mm, 7,50 mm, 8,00 mm, 8,50 mm, 9,00 mm, 9,50 mm oder beispielsweise von 10,00 mm, 10,50 mm, 11,00 mm, 11,50 mm, 12,00 mm, 12,50 mm, 13,00 mm, 13,50 mm, 14,00 mm, 14,50 mm oder beispielsweise von 15,00 mm oder so, wie zuvor wie für Kapillaren oder Antiresonanzelement-Vorformlinge im primären Vorformling beschrieben nur, dass durch die Geometrieveränderung eine kleinere Untergrenze für den Außendurchmesser der Kapillaren von 2,00 mm ermöglicht wird.

Werden die Antiresonanzelement-Vorformlinge aber beispielsweise als Kapillaren, die im nested-Design angeordnet sind, weiterverarbeitet, ist es bevorzugt, wenn der Außendurchmesser eines solchen Antiresonanzelement-Vorformlings als Bestandteil einer primären Vorform mindestens 5,00 mm beträgt. Das bedeutet, der Außendurchmesser der äußersten Kapillare der im nested-Design angeordneten Kapillaren dieses Antiresonanzelement-Vorformlings der Bestandteil einer primären Vorform geworden ist, beträgt mindestens 5,00 mm.

Es ist im Sinne der Erfindung für Antiresonanzelement-Vorformlinge, die Kapillaren, welche in einem nested-Design angeordnet sind und die Bestandteil von primären Vorformen geworden sind bevorzugt, einen Außendurchmesser von mindestens 5,00 bis 16,00 mm aufzuweisen, wie zuvor beschrieben.

Entsprechend einer weiteren bevorzugten Ausführungsform des erfindungsgemäßen Verfahrens zur Herstellung einer antiresonanten Hohlkernfaser, die einen sich entlang einer Faser-Längsachse erstreckenden Hohlkern und einen den Hohlkern umgebenden Mantelbereich aufweist, der mehrere Antiresonanzelemente umfasst, werden bevorzugt die folgenden Verfahrensschritte mindestens einmalig ausgeführt:

a) Bereitstellen eines primären Vorformlings, umfassend mindestens ein Hüllrohr, das eine Hüllrohr-Innenbohrung und eine Hüllrohr-Längsachse aufweist, entlang der sich eine von einer Innenhüllrohrfläche und einer Außenhüllrohrfläche begrenzte Hüllrohr-Wandung erstreckt, und umfassend Antiresonanzelement-Vorformlingen; und gegebenenfalls

Weiterverarbeiten des primären Vorformlings zu einer primären Vorform durch

i) Kollabieren, oder
ii) Kollabieren und gleichzeitiges Elongieren, oder
iii) Kollabieren und anschließendes Elongieren; und

b) Bereitstellen mindestens eines Mantelrohrs, das eine Mantelrohr-Innenbohrung und eine Mantelrohr-Längsachse aufweist, entlang der sich eine von einer Innenmantelfläche und einer Außenmantelfläche begrenzte Mantelrohr-Wandung erstreckt, und Einfügen des primären Vorformlings oder der primären Vorform in das Mantelrohr durch

i) Aufkollabieren; oder
ii) Aufkollabieren und gleichzeitiges Elongieren; oder
iii) Aufkollabieren und anschließendes Elongieren; unter Bildung einer finalen Vorform die durch einen Außendurchmesser von 28 mm bis 60 mm gekennzeichnet ist; und

c) Durchführen eines Faserzugs.

Dadurch gekennzeichnet, dass das Mantelrohr einen Außendurchmesser von 100 mm bis 240 mm aufweist.

Die Herstellung der finalen Vorform ausgehend von dem primären Vorformling oder der primären Vorform wird bevorzugt über einen Continuous-Draw Prozess ausgeführt. Beim Continious-Draw Prozess wird eine Vorform oder eine Baueinheit an einer Oberseite gehalten und langsam in einer abwärts gerichteten Bewegung durch eine Heizzone geführt. Für den kontinuierlichen Ziehvorgang wird ein sogenannter Capstan/Schlepper verwendet. Der Abschnitt erfolgt bei einer zuvor festgelegten Länge.

Der Unterschied zum Faserziehen liegt in der Ziehgeschwindigkeit, wobei die Geschwindigkeit beim Faserziehen in der Regel höher gewählt wird als beim Continuous-Draw Prozess.

Ein weiterer Unterschied zwischen dem Faserziehen und dem Continuous-Draw Prozess ist der Durchmesser des gezogenen Halbzeugs bzw. der antiresonanten Hohlkernfaser. Im Allgemeinen weisen langsam gezogene, im Continuous-Draw Prozess verarbeitete Halbezuge Durchmesser von größer als 2 mm auf. Hingegen weisen antiresonante Hohlkernfasern, die über das Faserziehen hergestellt wurden, üblicherweise Durchmesser zwischen 40 $\mu$m und 2 mm auf.

Weitere Unterschiede sind, dass eine antiresonante Hohlkernfaser Faser üblicherweise beschichtet wird und kontinuierlich aufgewickelt wird, ohne nach 1 m bis 10 m geschnitten zu werden, wie dies für Halbzeuge üblicherweise der Fall ist.

Die finale Vorform im Sinne der Erfindung ist damit eine primäre Vorform oder ein primärer Vorformling, auf die bzw. auf den mindestens ein Mantelrohr aufkollabiert worden ist und die bzw. der daraufhin im Durchmesser bereits reduziert worden ist, jedoch noch nicht bis zur antiresonanten Hohlkernfaser. Prinzipiell wird bei diesem Vorgang auch eine sekundäre Vorform im Sinne der vorliegenden Erfindung gebildet, diese wird jedoch bevorzugt nicht isoliert, sondern auf derselben Anlage zur finalen Vorform weiterverarbeitet. Das Herstellverfahren zunächst bei der finalen Vorform zu unterbrechen, verringert die mechanische und thermische Belastung, die in kurzer Zeit auf die Antiresonanzelement-Vorformlinge einwirkt. Die zweistufige Belastung ist im Allgemeinen schonender und vermindert das Risiko, dass die Antiresonanzelement-Vorformlinge beschädigt oder deformiert werden.

Finale Vorformen im Sinne der Erfindung sind durch einen Außendurchmesser zwischen 28 mm und 60 mm gekennzeichnet. Das bedeutet, finale Vorformen weisen einen Außendurchmesser von 28 mm, 29 mm, oder 30 mm, 31 mm, 32 mm, 33 mm, 34 mm, 35 mm, 36 mm, 37 mm, 38 mm, 39 mm, oder 40 mm, 41 mm, 42 mm, 43 mm, 44 mm, 45 mm, 46 mm, 47 mm, 48 mm, 49 mm, oder 50 mm, 51 mm, 52 mm, 53 mm, 54 mm, 55 mm, 56 mm, 57 mm, 58 mm, 59 mm, oder 60 mm auf.

Um im Sinne des erfindungsgemäßen Verfahrens die Belastung auf die Antiresonanzelement-Vorformlinge noch weiter zu verringern, ist es ebenfalls möglich, einen weiteren Verfahrensschritt durchzuführen, wobei zur Herstellung einer antiresonanten Hohlkernfaser, die einen sich entlang einer Faser-Längsachse erstreckenden Hohlkern und einen den Hohlkern umgebenden Mantelbereich aufweist, der mehrere Antiresonanzelemente umfasst, die folgenden Verfahrensschritte bevorzugt mindestens einmalig angewendet werden:

a) Bereitstellen eines primären Vorformlings, umfassend mindestens ein Hüllrohr, das eine Hüllrohr-Innenbohrung und eine Hüllrohr-Längsachse aufweist, entlang der sich eine von einer Innenhüllrohrfläche und einer Außenhüllrohrfläche begrenzte Hüllrohr-Wandung erstreckt, und umfassend Antiresonanzelement-Vorformlingen; und gegebenenfalls
Weiterverarbeiten des primären Vorformlings zu einer primären Vorform durch

    i) Kollabieren, oder
    ii) Kollabieren und gleichzeitiges Elongieren, oder
    iii) Kollabieren und anschließendes Elongieren; und

b) Bereitstellen mindestens eines Mantelrohrs, das eine Mantelrohr-Innenbohrung und eine Mantelrohr-Längsachse aufweist, entlang der sich eine von einer Innenmantelfläche und einer Außenmantelfläche begrenzte Mantelrohr-Wandung erstreckt, und Einfügen des primären Vorformlings oder der primären Vorform in das Mantelrohr durch

    i) Aufkollabieren oder
    ii) Aufkollabieren und gleichzeitiges Elongieren, oder
    iii) Aufkollabieren und anschließendes Elongieren;

unter Bildung einer sekundären Vorform die durch einen Außendurchmesser von 100 mm bis 200 mm gekennzeichnet ist; und
c) Herstellen einer finalen Vorform, die durch einen Außendurchmesser von 28 mm bis 60 mm gekennzeichnet ist, aus der sekundären Vorform durch

    i) Kollabieren, oder
    ii) Kollabieren und gleichzeitiges Elongieren, oder
    iii) Kollabieren und anschließendes Elongieren; und

d) Durchführen eines Faserzugs.

Dadurch gekennzeichnet, dass das Mantelrohr einen Außendurchmesser von 100 mm bis 240 mm aufweist.

Die Herstellung der sekundären Vorform führt einen weiteren Schritt in das erfindungsgemäße Verfahren ein, welcher mechanische und thermische Belastungen auf die Antiresonanzelement-Vorformlinge im Allgemeinen reduziert. Im Sinne der vorliegenden Erfindung ist es bevorzugt, wenn die Herstellung der sekundären Vorform in einem Upward-Draw Prozess erfolgt. Im Zuge eines Upward-Draw Prozesses wird das Halbzeug bei der Verarbeitung aufwärts bewegt. Im Gegensatz zu Downward-Draw Prozessen, in welchen das Halbzeug abwärts bewegt wird, kann dabei im Allgemeinen eine bessere Kontrolle der Zuggeschwindigkeit erreicht werden und das Risiko von unerwünschten Verformungen wird minimiert.

Die sekundäre Vorform im Sinne der Erfindung ist durch einen Außendurchmesser zwischen 100 mm und 200 mm gekennzeichnet. Sie weist also einen Durchmesser von 100 mm, 110 mm, 120 mm, 130 mm, 140 mm 150 mm oder beispielsweise 160 mm, 170 mm, 180 mm 190 mm oder beispielsweise 200 mm auf.

In einer bevorzugten Variante des erfindungsgemäßen Verfahrens wird die sekundäre Vorform mittels Continuous-Draw Prozess zu einer finalen Vorform wie zuvor beschrieben weiterverarbeitet.

Allen erfindungsgemäßen Ausführungsformen des erfindungsgemäßen Verfahrens ist gemein, dass sie ausgehend von Halbzeugen bzw. Bestandteilen von Halbzeugen ausgeführt werden, die verhältnismäßig große Durchmesser entsprechend den zuvor definierten Grenzen aufweisen. Die großen Dimensionen ermöglichen es bereits von sich aus, die Antiresonanzelement-Vorformlinge im Allgemeinen vor thermischen und mechanischen Belastungen während der Verarbeitungsschritte abzuschirmen. Dadurch ist es den Erfindern überraschend gelungen, ein Verfahren bereitzustellen, bei dem auf derselben Anlage die Fixierung der Antiresonanzelement-Vorformlinge in einem Hüllrohr und dessen Ummantelung mit einem Mantelrohr stattfinden kann. In einer anderen bevorzugten Ausführungsform des erfindungsgemäßen Verfahrens kann die Ummantelung des Hüllrohrs und der Faserzug auf derselben Anlage stattfinden.

Im Sinne der vorliegenden Erfindung ist es weiterhin aber auch möglich, das erfindungsgemäße Verfahren noch schonender auszuführen, indem entweder eine finale Vorform aus den beschriebenen Bestandteilen oder eine sekundäre und dann eine finale Vorform aus den beschriebenen Bestandteilen hergestellt wird bevor der Faserzug ausgeführt wird.

In einer bevorzugten Ausführungsform der Verfahrensschritte des erfindungsgemäßen Verfahrens ist es vorgesehen, während der Heißformprozessschritte einen Druck in den Antiresonanzelement-Vorformlingen bzw. Kapillaren der diversen Vorformlinge bzw. Vorformen anzulegen. Dadurch wird einerseits dem Kollabierdruck der Antiresonanzelement-Vorformlinge entgegengewirkt und eine wünschenswerte, runde Geometrie der Antiresonanzelement-Vorformlinge wird stabilisiert. Kollabierdruck beschreibt die Tendenz der Antiresonanzelement-Vorformlinge bei erfindungsgemäßen Heißformprozessschritten in sich zusammenzufallen. Beispielsweise ist es erfindungsgemäß möglich, den primären Vorformling oder die diversen Vorformen stirnseitig zuzuschmelzen oder mit einer geeigneten Masse abzudichten und anschließend mittels eines geeigneten Gases einen Gleichgewichtsdruck zu erzeugen. Andererseits kann mittels des angelegten Drucks auch eine gewünschte Geometrie der Kapillaren bzw. Antiresonanzelement-Vorformlinge erreicht werden, etwa indem die Antiresonanzelement-Vorformlinge durch den angelegten Druck von innen geweitet werden, umso bevorzugt eine runde Geometrie zu stabilisieren.

Der angelegte Druck stabilisiert eine runde, wünschenswerte Geometrie der Antiresonanzelement-Vorformlinge während der durchgeführten Heißformprozessschritte und wird bevorzugt mittels eines Gasstroms erzeugt. Bevorzugt wird dabei ein Inertgasstrom eingeleitet, besonders bevorzugt ein Strom aus Argon, Stickstoff oder synthetischer Luft ohne Wasseranteil.

Im Sinne des erfindungsgemäßen Verfahrens können die angelegten Drücke durch die verhältnismäßig großen Durchmesser der Bestandteile der erfindungsgemäßen Halbzeuge verhältnismäßig gering ausgewählt werden, wie durch die zuvor gezeigte Formel erklärt. Dadurch wird das Risiko vermindert, die Antiresonanzelement-Vorformlinge durch den innseitigen Druck zu beschädigen.

Im Sinne der Erfindung sind Drücke zwischen 50 pa und 400 pa bevorzugt. Das bedeutet, der Gleichgewichtsdruck zwischen dem Gasstrom und dem Kollabierdruck kann 50 pa, 55 pa, 60 pa, 65 pa, 70 pa, 75 pa, 80 pa, 85 pa, 90 pa, 95 pa, oder beispielsweise 100 pa, 105 pa, 110 pa, 115 pa, 120 pa, 125 pa, 130 pa, 135 pa, 140 pa, 145 pa, 150 pa, 155 pa, 160 pa, 165 pa, 170 pa, 175 pa, 180 pa, 185 pa, 190 pa, 195 pa oder beispielsweise 200 pa, 205 pa, 210 pa, 215 pa, 220 pa, 225 pa, 230 pa, 235 pa, 240 pa, 245 pa, 250 pa, 255 pa, 260 pa, 265 pa, 270 pa, 275 pa, 280 pa, 285 pa, 290 pa, 295 pa oder beispielsweise 300 pa, 305 pa, 310 pa, 315 pa, 320 pa, 325 pa, 330 pa, 335 pa, 340 pa, 345 pa, 350 pa, 355 pa, 360 pa, 365 pa, 370 pa, 375 pa, 380 pa, 385 pa, 390 pa, 395 pa oder beispielsweise 400 pa betragen.

Größere Durchmesser in den Antiresonanzelmenten oder Kapillaren der Halbzeuge erfordern dabei geringere Gleichgewichtsdrücke als kleinere Durchmesser. Im primären Vorformling liegt der angelegte Gleichgewichtsdruck bei Heißformprozessschritten bevorzugt zwischen 65 pa und 205 pa, in der primären Vorform und darüber hinaus liegt der angelegte Gleichgewichtsdruck bei Heißformprozesschritten bevorzugt zwischen 110 pa und 350 pa.

Im Sinne der Erfindung werden die Heißformschritte wie Elongieren, Kollabieren, Auskollabieren oder Faserzug bevorzugt bei Temperaturen zwischen 1750 °C und 2100 °C ausgeführt. Das bedeutet, die Prozesstemperatur kann beispielsweise 1750 °C, 1760 °C, 1770 °C, 1780 °C, 1790 °C, oder beispielsweise 1800 °C, 1810 °C, 1820 °C, 1830 °C, 1840 °C, 1850 °C, 1860 °C, 1870 °C, 1880 °C, 1890 °C oder beispielsweise 1900 °C, 1910 °C, 1920 °C, 1930 °C, 1940 °C, 1950 °C, 1960 °C, 1970 °C, 1980 °C, 1990 °C, oder beispielsweise 2000 °C, 2010 °C, 2020 °C, 2030 °C, 2040 °C, 2050 °C, 2060 °C, 2070 °C, 2080 °C, 2090 °C, oder beispielsweise 2100 °C betragen. Der Fachmann versteht, dass in Abhängigkeit des verwendeten Glases die Temperatur auch über 2100 °C oder unter 1750 °C liegen kann.

Ganz besonders bevorzugt sind im Sinne der Erfindung die drei folgenden Ausführungsformen des erfindungsgemäßen Verfahrens:

Ein erstes Verfahren, umfassend die Verfahrensschritte:

a) Bereitstellen eines primären Vorformlings umfassend mindestens ein Hüllrohr das eine Hüllrohr-Innenbohrung und eine Hüllrohr-Längsachse aufweist, entlang der sich eine von einer Innenhüllrohrfläche und einer Außenhüllrohrfläche begrenzte Hüllrohr-Wandung erstreckt, und umfassend Antiresonanzelement-Vorformlinge; und Weiterverarbeiten des primären Vorformlings zu einer primären Vorform durch

i) Kollabieren, oder
ii) Kollabieren und gleichzeitiges Elongieren; und

b) Bereitstellen mindestens eines Mantelrohrs, das eine Mantelrohr-Innenbohrung und eine Mantelrohr-Längsachse aufweist, entlang der sich eine von einer Innenmantelfläche und einer Außenmantelfläche begrenzte Mantelrohr-Wandung erstreckt, und Einfügen der primären Vorform in das Mantelrohr; und

c) Durchführen eines Faserzugs bei gleichzeitigem Aufkollabieren des Mantelrohrs.

Dadurch gekennzeichnet, dass das Mantelrohr einen Außendurchmesser von 100 mm bis 240 mm aufweist und dadurch gekennzeichnet, dass die Schritte a) und b) oder die Schritte b) und c) auf derselben Anlage stattfinden.

Ein zweites Verfahren, umfassend die Verfahrensschritte:

a) Bereitstellen eines primären Vorformlings, umfassend mindestens ein Hüllrohr, das eine Hüllrohr-Innenbohrung und eine Hüllrohr-Längsachse aufweist, entlang der sich eine von einer Innenhüllrohrfläche und einer Außenhüllrohrfläche begrenzte Hüllrohr-Wandung erstreckt, und umfassend Antiresonanzelement-Vorformlinge; und Weiterverarbeiten des primären Vorformlings zu einer primären Vorform durch

i) Kollabieren, oder
ii) Kollabieren und gleichzeitiges Elongieren; und

b) Bereitstellen mindestens eines Mantelrohrs, das eine Mantelrohr-Innenbohrung und eine Mantelrohr-Längsachse aufweist, entlang der sich eine von einer Innenmantelfläche und einer Außenmantelfläche begrenzte Mantelrohr-Wandung erstreckt, und Einfügen der primären Vorform in das Mantelrohr durch

i) Aufkollabieren, oder
ii) Aufkollabieren und gleichzeitiges Elongieren;

unter Bildung einer finalen Vorform die durch einen Außendurchmesser von 28 mm bis 60 mm gekennzeichnet ist; und

c) Durchführen eines Faserzugs.

Dadurch gekennzeichnet, dass das Mantelrohr einen Außendurchmesser von 100 mm bis 240 mm aufweist.

Ein drittes Verfahren, umfassend die Verfahrensschritte:

a) Bereitstellen eines primären Vorformlings, umfassend mindestens ein Hüllrohr, das eine Hüllrohr-Innenbohrung und eine Hüllrohr-Längsachse aufweist, entlang der sich eine von einer Innenhüllrohrfläche und einer Außenhüllrohrfläche begrenzte Hüllrohr-Wandung erstreckt, und umfassend Antiresonanzelement-Vorformlinge; und Weiterverarbeiten des primären Vorformlings zu einer primären Vorform durch

i) Kollabieren, oder
ii) Kollabieren und gleichzeitiges Elongieren; und

b) Bereitstellen mindestens eines Mantelrohrs, das eine Mantelrohr-Innenbohrung und eine Mantelrohr-Längsachse aufweist, entlang der sich eine von einer Innenmantelfläche und einer Außenmantelflache begrenzte Mantelrohr-Wandung erstreckt, und Einfügen der primären Vorform in das Mantelrohr durch

i) Aufkollabieren, oder
ii) Aufkollabieren und gleichzeitiges Elongieren;

unter Bildung einer sekundären Vorform die durch einen Außendurchmesser von 100 mm bis 200 mm gekennzeichnet ist; und

c) Herstellen einer finalen Vorform, die durch einen Außendurchmesser von 28 mm bis 60 mm gekennzeichnet ist, aus der sekundären Vorform durch

i) Kollabieren, oder
ii) Kollabieren und gleichzeitiges Elongieren; und

d) Durchführen eines Faserzugs.

Dadurch gekennzeichnet, dass das Mantelrohr einen Außendurchmesser von 100 mm bis 240 mm aufweist.

Wie bereits beschrieben sind die Halbzeuge wie insbesondere primäre Vorformlinge, sekundäre Vorformlinge, Baueinheiten und finale Vorformlinge mit verhältnismäßig großen Außendurchmessern für das erfindungsgemäße Verfahren charakteristisch.

### III. Erzeugnisse

Erfindungsgemäße primäre Vorformen werden aus primären Vorformlingen hergestellt, welche mindestens ein Hüllrohr und Antiresonanzelement-Vorformlinge umfassen. Sowohl die Hüllrohre als auch die Antiresonanzelement-Vorformlinge sind insbesondere durch ihre Außen- und ihre Innendurchmesser gekennzeichnet, die jeweils verhältnismäßig groß sind. Hüllrohre in diesem Sinne weisen bevorzugt einen Innendurchmesser von 25 mm bis 80 mm und einen Außendurchmesser von 41 mm bis 100 mm auf, wie vorstehend beschrieben.

Diese großen Durchmesser ermöglichen es, dass Antiresonanzelement-Vorformlinge bzw. Kapillaren in den erfindungsgemäßen primären Vorformen bzw. Canes so platziert werden können, dass nur eine geringe Winkelabweichung, wie zuvor stehend beschrieben, erreicht wird.

Hüllrohre mit solchen Durchmessern weisen bevorzugt den Vorteil auf, dass sie beim anschweißen der Antiresonanzelement-Vorformlinge nicht zur ungleichmäßigen Wärmeverteilung neigen, was das Risiko des Reißens des Hüllrohrs mindert. Gleichzeitig sind solche Hüllrohre groß genug, um sich nicht beim Anschweiß- bzw. Anschmelzprozess zu verformen und daher nicht mechanisch zu instabil zu sein.

Hüllrohre für primäre Vorformlinge aus denen erfindungsgemäße primäre Vorformen bevorzugt über das erfindungsgemäße Verfahren hergestellt werden weisen Längen zwischen 600 mm und 1000 mm wie zuvor beschrieben auf. Werden zu lange Hüllrohre ausgewählt, erhöht sich das Eigengewicht, was das Risiko einer unerwünschten Biegung erhöht, die zu groß ist. Zu kurze Hüllrohre hingegen weisen den Nachteil auf, dass der ggf. aus ihnen hergestellte Cane zu klein wird um die erfindungsgemäß bevorzugten Dimensionen die sich zur Ausführung des erfindungsgemäßen Verfahrens vorzugsweise besonders gut eignen zu erreichen.

Eine primäre Vorform, bzw. ein Cane im Sinne der vorliegenden Erfindung ist vorzugsweise ein großer Cane mit einer Länge von größer als 600 mm bis größer als 3000 mm wie zuvor beschrieben, bevorzugt ist der Cane größer als 1000 mm. Solche großen Canes gewährleisten bevorzugt, dass eine industriell bedeutende Ausbeute an antiresonanten Hohlkernfasern mittels des erfindungsgemäßen Verfahrens realisiert wird.

Erfindungsgemäße primäre Vorformen (Cane) weisen bevorzugt einen Außendurchmesser zwischen 24 mm und 60 mm auf, das bedeutet, ihr Außendurchmesser beträgt bevorzugt 24 mm, 25 mm, 26 mm, 27 mm, 28 mm, 29 mm, 30 mm, 31 mm, 32 mm, 33 mm, 34 mm, 35 mm, 36 mm, 37 mm, 38 mm, 39 mm oder beispielsweise 40 mm, 41 mm, 42 mm, 43 mm, 44 mm, 45 mm, 46 mm, 47 mm, 48 mm, 49 mm oder beispielsweise 50 mm, 51 mm, 52 mm, 53 mm, 54 mm, 55 mm, 56 mm, 57 mm, 58 mm, 59 mm oder beispielsweise 60 mm. Bevorzugt ist der Außendurchmesser der erfindungsgemäßen primären Vorformen größer als 24 mm.

Erfindungsgemäße primäre Vorformen (Cane) weisen bevorzugt einen Innendurchmesser zwischen 14 mm und 55 mm auf, also beispielsweise 14 mm, 15 mm, 16 mm, 17 mm, 18 mm, 19 mm, oder beispielsweise 20 mm, 21 mm, 22 mm, 23 mm, 24 mm, 25 mm, 26 mm, 27 mm, 28 mm, 29 mm oder beispielsweise 30 mm 31 mm, 32 mm, 33 mm, 34 mm, 35 mm, 36 mm, 37 mm, 38mm, 39 mm oder beispielsweise 40 mm 41 mm, 42 mm, 43 mm, 44 mm, 45 mm, 46 mm, 47 mm, 48mm, 49 mm oder beispielsweise 50 mm, 51 mm, 52 mm, 53 mm, 54 mm oder beispielsweise 55 mm auf.

Es ist erfindungsgemäß bevorzugt, wenn die Antiresonanzelement-Vorformlinge in den primären Vorformen im nested-Design angeordnete Kapillaren sind. Im Sinne der vorliegenden Erfindung bezeichnet der Begriff nested-Design einen Zustand, bei welchem Antiresonanzelement-Vorformlinge ineinander platziert werden und anschließend im Hüllrohr an den dafür vorgesehenen Stellen platziert werden. Das bedeutet, eine Kapillare, die einen sich entlang einer Kapillar-Längsachse erstreckenden Hohlkern und einen den Hohlkern umgebenden Kapillarmantelbereich aufweist, wird innerhalb des Hohlkerns mindestens einer anderen Kapillare mit einem größeren Innen- und Außendurchmesser platziert. Dieser Vorgang kann erfindungsgemäß prinzipiell beliebig oft wiederholt werden. Es ist erfindungsgemäß denkbar, dass die im nested-Design angeordneten Kapillaren vor der Platzierung Im Hüllrohr auch bereits ineinander fixiert werden. Dies ist aber nicht zwingend notwendig, die Fixierung erfolgt auch bei der Weiterverarbeitung des primären Vorformlings über die erfindungsgemäßen Heißformprozessschritte. Die so angeordneten Kapillaren werden dann im Allgemeinen im Hohlkern eines geeigneten Hüllrohrs platziert und an den Enden des Hüllrohrs im Allgemeinen fixiert, um einen primären Vorformling zu erzeugen. Der primäre Vorformling wird anschließen bevorzugt gleichzeitig kollabiert und elongiert, um eine primäre Vorform zu erzeugen.

Im Sinne der vorliegenden Erfindung weist die Kapillare mit dem größten Außendurchmesser, die im nested-Design also die äußerste Kapillare von mindestens zwei Kapillaren ist, einen Außendurchmesser von mindestens 5,00 mm auf, wenn der so beschreibbare Antiresonanzelement-Vorformling Bestandteil einer primären Vorform geworden ist. Insgesamt weisen die Kapillaren, die erfindungsgemäß Bestandteil der primären Vorform werden, bevorzugt Außendurchmesser von mindestens 2,00 mm wie zuvor beschrieben auf.

Ein weiterer erfindungsgemäßer Vorteil, der durch die verhältnismäßig groß gewählten Durchmesser der diversen erfindungsgemäßen Halbezuge bevorzugt erzielt wird, ist, dass die Drücke, die beim Erzeugen eines Gleichgewichtsdrucks oder zur Erweiterung der Antiresonanzelement-Vorformlinge mittels Gasstroms wie zuvor beschrieben entstehen, verhältnismäßig gering bleiben können. Durch die geringen Drücke wird die runde Form der Antiresonanzelement-Vorformlinge stabilisiert und gleichzeitig das Risiko gemindert, sie durch den Druck des Gasstromes zu beschädigen.

Von der Erfindung ebenfalls umfasst sind Baueinheiten, welche primäre Vorformlinge oder primäre Vorformen, die in ein Mantelrohr eingefügt worden sind, bevor ein Aufkollabierungsschritt erfolgt ist, beschreiben. Baueinheiten im Sinne der Erfindung sind ein erfindungsgemäßes Halbzeug bzw. Zwischenprodukt des erfindungsgemäßen Verfahrens in jeder seiner möglichen Ausführungsformen.

Im Sinne des erfindungsgemäßen Verfahrens können aus der primären Vorform oder dem primären Vorformling über die den Schritt einer Baueinheit weitere Vorformen erzeugt werden, die nicht zwingend isoliert werden und durch mindestens ein zusätzliches Mantelrohr charakterisiert sind, welches auf die primäre Vorform oder den primären Vorformling aufkollabiert wurde.

Durch das Aufkollabieren des mindestens einen Mantelrohrs bilden sich an den Grenzflächen zwischen Hüllrohr und Mantelrohr oder zwischen Mantelrohr und Mantelrohr sogenannte Chlorringe. Dies sind Bereiche, in denen das Glas im Vergleich zum restlichen Glaskörper an Chlor verarmt ist. Üblicherweise wird zur Herstellung der erfindungsgemäßen Halbzeuge bzw. von antiresonanten Hohlkernfasern Glas verwendet, welches endständig mit einer Si-Cl Bindung anstatt einer Si-OH Bindung abgeschirmt ist. Dadurch wird im Allgemeinen eine ungewollte Anlagerung von Wassermolekülen an die Oberflächen vermieden. Während des erfindungsgemäßen Verfahrens verarmen die entsprechenden Flächen zwischen Hüllrohr-Außenfläche und Mantelrohr-Innenfläche an Chlor. Die Chlorringe haben einen Einfluss auf das Brechungsverhalten in der fertigen antiresonanten Hohlkernfaser und verbessern im Allgemeinen die Lichtführungseigenschaften gegenüber mittels anderer Verfahren hergestellter antiresonanter Hohlkernfasern.

Erfindungsgemäße sekundäre Vorformen werden bevorzugt nicht isoliert, bevor sie zu antiresonanten Hohlkernfasern oder finalen Vorformen weiterverarbeitet werden. Sekundäre Vorformen im Sinne der vorliegenden Erfindung sind dadurch gekennzeichnet, dass mindestens ein Mantelrohr auf eine primäre Vorform oder einen primären Vorformling aufkollabiert worden ist, wodurch ein Außendurchmesser zwischen 100 mm und 200 mm erhalten wird. Antiresonante Hohlkernfasern, die aus sekundären Vorformen im Sinne der Erfindung hergestellt werden, weisen daher auch mindestens einen Chlorring auf. Sekundäre Vorformen sind ein mögliches Zwischenprodukt einiger Ausführungsformen des erfindungsgemäßen Verfahrens.

Erfindungsgemäße finale Vorformen werden bevorzugt zumindest von jener Anlage isoliert, auf der sie hegestellt und/oder verarbeitet worden sind. Durch die Verringerung des Außendurchmessers werden die Antiresonanzelement-Vorformlinge während des Herstellprozesses der antiresonanten Hohlkernfaser im Allgemeinen zusätzlich geschont und weniger thermischer und mechanischer Belastung ausgesetzt. Finale Vorformen sind mögliche Zwischenprodukte einiger Ausführungsformen des erfindungsgemäßen Verfahrens.

Im Sinne der Erfindung können die erfindungsgemäßen Vorformen dazu verwendet werden, antiresonante Hohlkernfasern in einem oder mehreren Heißformprozessschritten zu erzeugen.

BEISPIELE

Beispiele für primäre Vorformlinge und primäre Vorformen im Sinne der Erfindung

Beispiele für Erfindungsgemäße Stacks (Hüllrohr mit losen/punktuell befestigten Kapillaren) und daraus herstellbare Canes (gestreckter Stack, wobei Kapillaren über komplette Länge mit Hüllrohr verbunden sind) sowie Mantelrohre, die aufkollabiert werden können:

Das erfindungsgemäße Verfahren wurde ausgehend von diversen Hüllrohr-, Kapillar- und Mantelrohrgrößen ausgeführt und die Gleichgewichtsdrücke für die entsprechenden Geometrien wurden bestimmt.

Tabelle 1. Ausgewählte Geometrien für Hüllrohr und die jeweils größte im nested-Design angeordnete Kapillare. OD entspricht dem Außendurchmesser in mm, ID dem Innendurchmesser in mm, dem Verhältnis aus Außen- und Innendurchmesser und $p_{GGW}$ dem Gleichgewichtsdruck in pa.

| | | | Bsp 1 | Bsp 2 | Bsp 3 | Bsp 4 | Bsp 5 | Bsp 6 | Bsp 7 | Bsp 8 | Bsp 9 | Bsp 10 |
|---|---|---|---|---|---|---|---|---|---|---|---|---|
| Stack | Hüllrohr | OD | 41 | 41 | 50 | 56 | 65 | 65 | 70 | 70 | 65 | 90 |
| | | ID | 25 | 25 | 30,5 | 40 | 50 | 50 | 55 | 60 | 55 | 75 |
| | | OD/ID | 1,64 | 1,64 | 1,64 | 1,40 | 1,30 | 1,30 | 1,27 | 1,17 | 1,18 | 1,20 |
| | größte Kap. | OD | 8,5 | 8,5 | 10,5 | 14 | 16,9 | 16,9 | 17 | 19 | 19,5 | 26 |
| | | ID | 7,7 | 7,7 | 9,55 | 13,1 | 16 | 15,47 | 15,35 | 17,5 | 17 | 23,5 |
| | | PGGW | 205 | 205 | 166 | 123 | 101 | 103 | 103 | 91 | 91 | 67 |
| | | OD/ID | 1,10 | 1,10 | 1,10 | 1,07 | 1,06 | 1,09 | 1,11 | 1,09 | 1,15 | 1,11 |

Die Tabelle 1 zeigt zehn Beispiele für Hüllrohr- und Kapillargeometrien die beispielsweise in primären Vorformlingen im Sinne der Erfindung Anwendung finden. Es kann der Tabelle entnommen werden, dass insbesondere solche Kombinationen aus Hüllrohr und Kapillaren, bei denen Außen- und Innendurchmesser groß sind, zu geringen Gleichgewichtsdrücken führen die minimal benötigt werden, um die Geometrie der Kapillaren beim Verarbeitungsprozess zu stabilisieren.

Tabelle 2. Die Tabelle zeigt die Veränderung der Außen- und Innendurchmesser, die Veränderung ihrer Verhältnisse und die Veränderung im Gleichgewichtsdruck nach der Verarbeitung der primären Vorformlinge zu primären Vorformen im Sinne der Erfindung

| | | | Bsp 1 | Bsp 2 | Bsp 3 | Bsp 4 | Bsp 5 | Bsp 6 | Bsp 7 | Bsp 8 | Bsp 9 | Bsp 10 |
|---|---|---|---|---|---|---|---|---|---|---|---|---|
| Cane | Hüllrohr | OD | 24 | 33,5 | 33,5 | 33,5 | 47 | 47 | 47 | 47 | 45 | 53 |
| | | ID | 14,6 | 20,4 | 20,4 | 23,9 | 36,2 | 36,2 | 36,9 | 40,3 | 38,1 | 44,2 |
| | | OD/ID | 1,64 | 1,64 | 1,64 | 1,40 | 1,30 | 1,30 | 1,27 | 1,17 | 1,18 | 1,20 |
| | größte Kap. | OD | 5,0 | 6,9 | 7,0 | 8,4 | 12,2 | 12,2 | 11,4 | 12,8 | 13,5 | 15,3 |
| | | ID | 4,5 | 6,3 | 6,4 | 7,8 | 11,6 | 11,2 | 10,3 | 11,8 | 11,8 | 13,8 |
| | | PGGW | 350 | 252 | 248 | 205 | 140 | 142 | 153 | 135 | 132 | 114 |
| | | OD/ID | 1,10 | 1,10 | 1,10 | 1,07 | 1,06 | 1,09 | 1,11 | 1,09 | 1,15 | 1,11 |

Das erfindungsgemäße Verfahren wurde an den zehn primären Vorformlingen ausgeführt und sie wurden zu primären Vorformen umgesetzt. Die erfindungsgemäß großen Kapillaren und Hüllrohre erfordern es ebenfalls, dass große Mantelrohre eingesetzt werden, um das erfindungsgemäße Verfahren auszuführen. Die Tabelle drei zeigt die Geometrieparameter der Mantelrohre, die auf die diversen primären Vorformen aufkollabiert wurden.

Tabelle 3. Geometrien der Mantelrohre, welche auf die primären Vorformen aufkollabiert wurden.

| | | | Bsp 1 | Bsp 2 | Bsp 3 | Bsp 4 | Bsp 5 | Bsp 6 | Bsp 7 | Bsp 8 | Bsp 9 | Bsp 10 |
|---|---|---|---|---|---|---|---|---|---|---|---|---|
| Mantelrohr | Jackets | OD | 65,2 | 90 | 90 | 90 | 120 | 150 | 150 | 150 | 200 | 200 |
| | | ID | 26 | 35 | 35 | 35 | 50 | 50 | 50 | 50 | 48 | 55 |
| | | OD/ID | 2,51 | 2,57 | 2,57 | 2,57 | 2,40 | 3,00 | 3,00 | 3,00 | 4,17 | 3,64 |

**Patentansprüche**

1. Verfahren zur Herstellung einer antiresonanten Hohlkernfaser, die einen sich entlang einer Faser-Längsachse erstreckenden Hohlkern und einen den Hohlkern umgebenden Mantelbereich aufweist, der mehrere Antiresonanzelemente umfasst, wobei das Verfahren die mindestens einmalig ausgeführten Verfahrensschritte umfasst:

a) Bereitstellen eines primären Vorformlings, umfassend mindestens ein Hüllrohr, das eine Hüllrohr-Innenbohrung und eine Hüllrohr-Längsachse aufweist, entlang der sich eine von einer Innenhüllrohrfläche und einer Außenhüllrohrfläche begrenzte Hüllrohr-Wandung erstreckt, und umfassend Antiresonanzelement-Vorformlinge; und gegebenenfalls

Weiterverarbeiten des primären Vorformlings zu einer primären Vorform durch

    i) Kollabieren, oder
    ii) Kollabieren und gleichzeitiges Elongieren, oder
    iii) Kollabieren und anschließendes Elongieren; und

b) Bereitstellen mindestens eines Mantelrohrs, das eine Mantelrohr-Innenbohrung und eine Mantelrohr-Längsachse aufweist, entlang der sich eine von einer Innenmantelfläche und einer Außenmantelfläche begrenzte Mantelrohr-Wandung erstreckt, und Einfügen des primären Vorformlings oder der primären Vorform in das Mantelrohr; und

c) Durchführen eines Faserzugs bei gleichzeitigem Aufkollabieren des Mantelrohres.

**Dadurch gekennzeichnet, dass** das Mantelrohr einen Außendurchmesser von 100 mm bis 240 mm, bevorzugt größer als 120 mm, aufweist.

2. Verfahren gemäß Anspruch 1, **dadurch gekennzeichnet, dass** die Schritte b) und c) folgendermaßen abgewandelt werden:

b) Bereitstellen mindestens eines Mantelrohrs, das eine Mantelrohr-Innenbohrung und eine Mantelrohr-Längsachse aufweist, entlang der sich eine von einer Innenmantelfläche und einer Außenmantelfläche begrenzte Mantelrohr-Wandung erstreckt, und Einfügen des primären Vorformlings oder der primären Vorform in das Mantelrohr durch

    i) Aufkollabieren; oder
    ii) Aufkollabieren und gleichzeitiges Elongieren, oder
    iii) Aufkollabieren und gleichzeitiges Elongieren;

unter Bildung einer finalen Vorform die durch einen Außendurchmesser von 28 mm bis 60 mm gekennzeichnet ist; und

c) Durchführen eines Faserzugs.

3. Verfahren gemäß Anspruch 1 und 2, **dadurch gekennzeichnet, dass** die Verfahrensschritte b) und c) folgendermaßen abgewandelt werden und ein Schritt d) hinzugefügt wird:

b) Bereitstellen mindestens eines Mantelrohrs, das eine Mantelrohr-Innenbohrung und eine Mantelrohr-Längsachse aufweist, entlang der sich eine von einer Innenmantelfläche und einer Außenmantelfläche begrenzte Mantelrohr-Wandung erstreckt, und Einfügen des primären Vorformlings oder der primären Vorform in das Mantelrohr durch

    i) Aufkollabieren oder
    ii) Aufkollabieren und gleichzeitiges Elongieren, oder
    iii) Aufkollabieren und anschließendes Elongieren;

unter Bildung einer sekundären Vorform die durch einen Außendurchmesser von 100 mm bis 200 mm gekennzeichnet ist; und

c) Herstellen einer finalen Vorform, die durch einen Außendurchmesser von 28 mm bis 60 mm gekennzeichnet ist, aus der sekundären Vorform durch

    i) Kollabieren, oder
    ii) Kollabieren und gleichzeitiges Elongieren, oder
    iii) Kollabieren und anschließendes Elongieren; und

d) Durchführen eines Faserzugs.

4. Verfahren gemäß Anspruch 1, **dadurch gekennzeichnet, dass** die Schritte b) und c) auf derselben Anlage ausgeführt werden.

5. Verfahren gemäß Anspruch 2 und 3, **dadurch gekennzeichnet, dass** ein oder mehr Verfahrensschritte auf unterschiedlichen Anlagen ausgeführt werden.

6. Verfahren gemäß Anspruch 1 bis 5 **dadurch gekennzeichnet, dass** der Durchmesser der Antiresonanzelement-Vorformlinge größer als 2,00 mm ist.

7. Verfahren gemäß Anspruch 1 bis 6, **dadurch gekennzeichnet, dass** die Antiresonanzelemente in der primären Vorform eine Winkelabweichung gegenüber dem Hüllrohr von weniger als 4,000° bis weniger als 0,05° aufweisen.

8. Verfahren gemäß Anspruch 1 bis 7, **dadurch gekennzeichnet, dass** das Mantelrohr in einem Heißformschritt unter Anlegen eines Vakuums zwischen der Innenseite des Mantelrohrs und der Außenseite des primären Vorformlings oder der primären Vorform auf den primären Vorformling oder die primäre Vorform aufkollabiert wird.

9. Verfahren gemäß Anspruch 1 bis 8, **dadurch gekennzeichnet, dass** in den Antiresonanzelement-Vorformlingen mittels eines Gasstroms ein Druck von 50 Pa bis 400 Pa angelegt wird.

10. Verfahren gemäß Anspruch 1 bis 9, **dadurch gekennzeichnet, dass** die primären Vorformen eine Wanddicke der Hüllrohrwand von größer als 4,00 mm aufweisen.

11. Primäre Vorform zur Herstellung antiresonanter Hohlkernfasern, **dadurch gekennzeichnet, dass** sie einen Außendurchmesser zwischen 24 mm und 60 mm, bevorzugt zwischen 33 mm und 60 mm aufweist und dass die darin fixierte Kapillare mit dem geringsten Außendurchmesser mindestens einen Außendurchmesser von 2,00 mm aufweist.

12. Primäre Vorform zur Herstellung antiresonanter Hohlkernfasern, **dadurch gekennzeichnet, dass** sie einen Außendurchmesser zwischen 24 mm und 60 mm, bevorzugt zwischen 33 mm und 60 mm, aufweist und dass in ihr mindestens ein Antiresonanzelement-Vorformling mit einem Außendurchmesser von mindestens 5,00 mm bis 16,00 mm, bevorzugt 6,50 mm bis 16,00 mm, fixiert ist.

13. Baueinheit umfassend eine primäre Vorform gemäß Anspruch 11 bis 12 und mindestens ein Mantelrohr, **dadurch gekennzeichnet, dass** das mindestens eine Mantelrohr einen Außendurchmesser von 100 mm bis 240 mm aufweist.

14. Verwendung von primären Vorformen und Baueinheiten gemäß den Ansprüchen 11 bis 13 in einem Verfahren gemäß Anspruch 1 bis 10.

15. Antiresonante Hohlkernfaser erhältlich gemäß einem Verfahren nach Anspruch 1 bis 10.

Europäisches Patentamt
European Patent Office
Office européen des brevets

# EUROPÄISCHER RECHERCHENBERICHT

Nummer der Anmeldung

EP 24 19 4438

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | GREGORY T. JASION ET AL: "Fabrication of tubular anti-resonant hollow core fibers: modelling, draw dynamics and process optimization", OPTICS EXPRESS, Bd. 27, Nr. 15, 10. Juli 2019 (2019-07-10), Seite 20567, XP055655469, DOI: 10.1364/OE.27.020567 * 3. The model; 6. Increasing rhe yield; Abbildung 2; Tabellen 1,2 *<br>----- | 1,4-15 | INV. C03B37/012 C03B37/027 |
| X | EP 3 766 850 A1 (HERAEUS QUARZGLAS [DE]) 20. Januar 2021 (2021-01-20) * Absätze [0021], [0022], [0036], [0057] - [0062]; Ansprüche; Abbildung 1 *<br>----- | 2-15 | |
| X | EP 3 766 847 A1 (HERAEUS QUARZGLAS [DE]) 20. Januar 2021 (2021-01-20) * Absätze [0073], [0076]; Ansprüche; Abbildung 2c *<br>----- | 2-15 | RECHERCHIERTE SACHGEBIETE (IPC) |
| X | CN 115 521 059 A (YANGTZE OPTICAL FIBRE & CABLE JOINT STOCK LTD CO) 27. Dezember 2022 (2022-12-27) * Ansprüche; Abbildungen; Beispiele *<br>----- | 11,12,15 | C03B |

Der vorliegende Recherchenbericht wurde für alle Patentansprüche erstellt

| Recherchenort | Abschlußdatum der Recherche | Prüfer |
|---|---|---|
| Den Haag | 10. Januar 2025 | Creux, Sophie |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

.......................................................................

& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 24 19 4438

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

10-01-2025

| Im Recherchenbericht angeführtes Patentdokument | Datum der Veröffentlichung | Mitglied(er) der Patentfamilie | Datum der Veröffentlichung |
|---|---|---|---|
| EP 3766850 A1 | 20-01-2021 | CN 114127022 A | 01-03-2022 |
| | | EP 3766850 A1 | 20-01-2021 |
| | | JP 7546650 B2 | 06-09-2024 |
| | | JP 2022541488 A | 26-09-2022 |
| | | US 2022267193 A1 | 25-08-2022 |
| | | WO 2021009231 A1 | 21-01-2021 |
| EP 3766847 A1 | 20-01-2021 | CN 113905991 A | 07-01-2022 |
| | | EP 3766847 A1 | 20-01-2021 |
| | | JP 7520896 B2 | 23-07-2024 |
| | | JP 2022540322 A | 15-09-2022 |
| | | US 2022356108 A1 | 10-11-2022 |
| | | WO 2021009225 A1 | 21-01-2021 |
| CN 115521059 A | 27-12-2022 | KEINE | |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

**In der Beschreibung aufgeführte Patentdokumente**

- EP 3323791 A
- EP 3590899 A
- EP 4289798 A
- EP 4011840 A
- EP 3766849 A
- EP 3766844 A
- EP 3766848 A
- EP 3766348 A